(19) Europäisches Patentamt
European Patent Office
Office européen des brevets

(11) **EP 4 322 315 A1**

(12) **EUROPEAN PATENT APPLICATION**
published in accordance with Art. 153(4) EPC

(43) Date of publication:
**14.02.2024 Bulletin 2024/07**

(21) Application number: **22884109.4**

(22) Date of filing: **21.10.2022**

(51) International Patent Classification (IPC):
*H01M 50/531* (2021.01)  *H01M 50/559* (2021.01)
*H01M 50/179* (2021.01)  *H01M 10/04* (2006.01)
*H01M 50/538* (2021.01)  *H01M 50/583* (2021.01)

(52) Cooperative Patent Classification (CPC):
H01M 4/13; H01M 10/04; H01M 10/052;
H01M 10/0587; H01M 50/107; H01M 50/152;
H01M 50/179; H01M 50/184; H01M 50/186;
H01M 50/213; H01M 50/249; H01M 50/503;
H01M 50/517; H01M 50/528; H01M 50/531;

(Cont.)

(86) International application number:
**PCT/KR2022/016198**

(87) International publication number:
**WO 2023/068888 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 KR 20210142180**

(71) Applicant: **LG Energy Solution, Ltd.**
**Seoul 07335 (KR)**

(72) Inventors:
• **CHOI, Su-Ji**
 **Daejeon 34122 (KR)**
• **MIN, Geon-Woo**
 **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CYLINDRICAL BATTERY, AND BATTERY PACK AND VEHICLE INCLUDING SAME**

(57) Disclosed is a cylindrical battery, which includes an electrode assembly; a battery housing accommodating the electrode assembly and electrically connected to the second uncoated portion; a cap plate configured to seal the open portion of the battery housing; a current collecting plate having a rim portion, an uncoated portion coupling portion coupled to the first uncoated portion, and a terminal coupling portion spaced apart from the uncoated portion coupling portion; an electrode terminal riveted through a perforated hole formed in a closed portion and coupled to the terminal coupling portion; and an insulating gasket interposed between the electrode terminal and the perforated hole, wherein the electrode terminal includes a body portion; an outer flange portion; an inner flange portion; and a flat portion provided on an inner side of the inner flange portion and coupled to the terminal coupling portion.

EP 4 322 315 A1

FIG. 5

(52) Cooperative Patent Classification (CPC): (Cont.)
**H01M 50/538; H01M 50/545; H01M 50/559;
H01M 50/567; H01M 50/583; H01M 50/586;
H01M 50/59;** Y02E 60/10

**Description**

TECHNICAL FIELD

The present disclosure relates to a cylindrical battery, and a battery pack and a vehicle including the cylindrical battery.

The present application claims priority to Korean Patent Application No. 10-2021-0142180 filed on October 22, 2021 in the Republic of Korea, the disclosures of which are incorporated herein by reference.

BACKGROUND ART

Secondary batteries are applied to very diverse fields. Among these, for example, a battery pack applied to a device such as an electric vehicle requires large capacity and high output. In addition, such a battery pack having large capacity and high output may include, for example, a cylindrical battery as a unit cell.

In the case of a cylindrical battery having large capacity and high output characteristics, electrode tabs may be provided on both sides of the jelly-roll to increase current collection efficiency, and a current collecting plate may be coupled to each side of the jelly-roll. By applying this structure, the contact area between the electrode tab and the current collecting plate may be maximized, thereby minimizing the resistance generated at the connection portion between components.

When a cylindrical battery is applied to a device such as a vehicle as described above, external impacts and vibrations may be frequently applied during use, which may cause damage to the coupling portion for electrical connection between components. Damage to these coupling portion causes product defects.

Alternatively, even if the coupling portion for electrical connection is damaged but the electrical connection is not completely cut off, if the coupling surface area between components is reduced due to partial damage to the welding area, excessive heat generation may occur due to an increase in resistance, or an internal short circuit may occur due to deformation of the shape of the components.

Therefore, there is a need to develop a cylindrical battery having a structure capable of preventing force from being concentrated on a coupling portion between components even when an external impact and/or vibration is applied during use.

Meanwhile, secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. Such a unit secondary battery cell has an operating voltage of about 2.5V to 4.5V. Therefore, when a higher output voltage is required, a battery pack is configured by connecting a plurality of battery cells in series. In addition, a plurality of battery cells may be connected in parallel to form a battery pack according to the charge/discharge capacity required for the battery pack. Accordingly, the number of battery cells included in the battery pack and the form of electrical connection may be variously set according to the required output voltage and/or charge/discharge capacity.

Meanwhile, as a kind of secondary battery cell, there are known cylindrical, rectangular, and pouch-type battery cells. In the case of a cylindrical battery cell, a separator serving as an insulator is interposed between a positive electrode and a negative electrode, and they are wound to form an electrode assembly in the form of a jelly roll, which is inserted into a battery housing together with an electrolyte to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the opening of the battery housing, and the negative electrode terminal is the battery housing.

However, according to the conventional cylindrical battery cell having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical battery cells with a form factor of 18650 or 21700, resistance and heat are not a major issue. However, when the form factor is increased to apply the cylindrical battery cell to an electric vehicle, the cylindrical battery cell may ignite while a lot of heat is generated around the electrode tab during the rapid charging process.

In order to solve this problem, there is provided a cylindrical battery cell (so-called tab-less cylindrical battery cell) in which the uncoated portion of the positive electrode and the uncoated portion of the negative electrode are designed to be positioned at the top and bottom of the j elly-roll type electrode assembly, respectively, and the current collecting plate is welded to the uncoated portion to improve the current collecting efficiency.

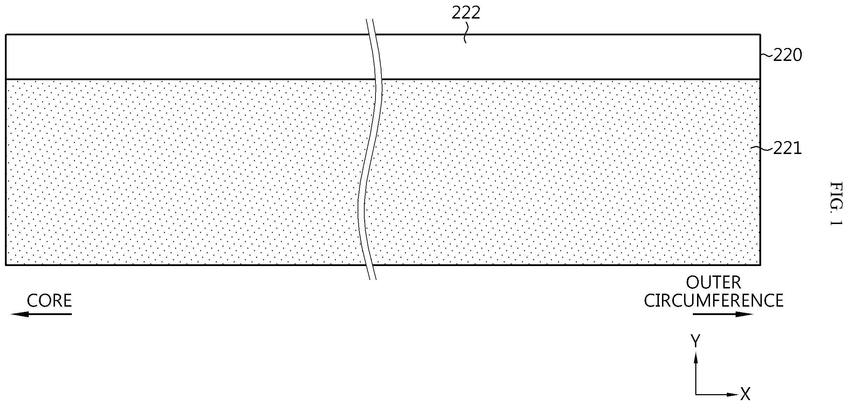

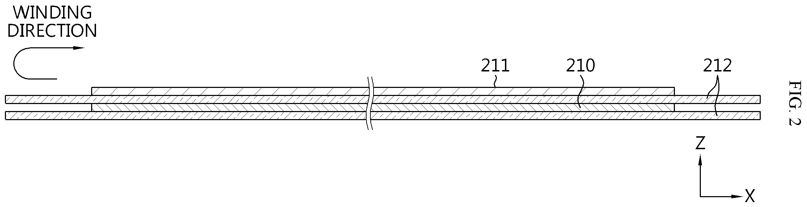

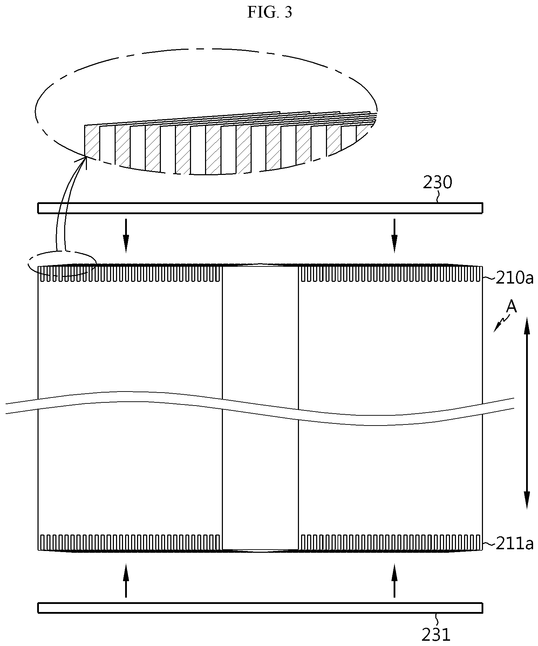

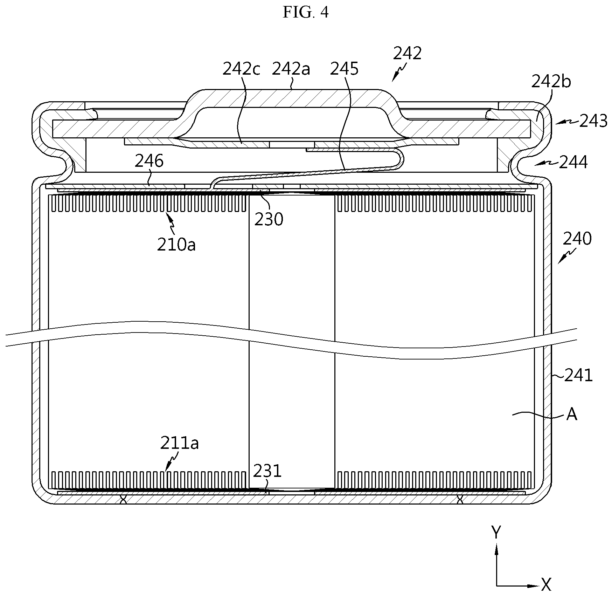

FIGS. 1 to 4 are diagrams showing a process of manufacturing a tab-less cylindrical battery. FIG. 1 shows the structure of an electrode, FIG. 2 shows a process of winding the electrode, and FIG. 3 shows a process of welding a current collecting plate to a bent surface of an uncoated portion. FIG. 4 is a sectional view showing a tab-less cylindrical battery, taken along the longitudinal direction Y.

Referring to FIGS. 1 to 4, a positive electrode 210 and a negative electrode 211 have a structure in which a sheet-shaped current collector 220 is coated with an active material 221, and include an uncoated portion 222 at one long side along the winding direction X.

An electrode assembly A is manufactured by sequentially stacking the positive electrode 210 and the negative electrode 211 together with two sheets of separators 212 as shown in FIG. 2 and then winding them in one direction X. At this time, the uncoated portions of the positive electrode 210 of the negative electrode 211 are arranged in opposite directions.

After the winding process, the uncoated portion 210a of the positive electrode 210 and the uncoated portion 211a of the negative electrode 211 are bent toward the core. After that, current collecting plates 230, 231 are welded and coupled to the uncoated portions 210a, 211a, respectively.

An electrode tab is not separately coupled to the positive electrode uncoated portion 210a and the negative electrode uncoated portion 211a, the current collecting plates 230, 231 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

However, when the form factor of the cylindrical battery increases and the magnitude of the charging current during rapid charging increases, the heat problem occurs again in the tab-less cylindrical battery.

Specifically, the conventional tab-less cylindrical battery 240 includes a battery housing 241 and a sealing body 242 as shown in FIG. 4. The sealing body 242 includes a cap plate 242a, a sealing gasket 242b and a connection plate 242c. The sealing gasket 242b surrounds the edge of the cap plate 242a and is fixed by a crimping portion 243. In addition, the electrode assembly A is fixed in the housing 241 by a beading portion 244 to prevent vertical movement.

Typically, the positive electrode terminal is the cap plate 242a of the sealing body 242, and the negative electrode terminal is the battery housing 241. Therefore, the current collecting plate 230 coupled to the uncoated portion 210a of the positive electrode 210 is electrically connected to the connection plate 242c attached to the cap plate 242a through the lead 245 in a strip form. In addition, the current collecting plate 231 coupled to the uncoated portion 211a of the negative electrode 211 is electrically connected to the bottom of the housing 241. The insulator 246 covers the current collecting plate 230 to prevent the battery housing 241 and the uncoated portion 210a of the positive electrode 210 having different polarities from contacting each other and causing a short circuit.

When the current collecting plate 230 is connected to the connection plate 242c, the lead 245 of a strip form is used. The lead 245 is separately attached to the current collecting plate 230 or is manufactured integrally with the current collecting plate 230. However, since the lead 245 is in the form of a thin strip, its sectional area is small, and thus, when a rapid charging current flows, a lot of heat is generated. In addition, excessive heat generated from the lead 245 is transferred toward the electrode assembly A to shrink the separator 212, which may cause an internal short circuit that is a main cause of thermal runaway.

The lead 245 also occupies a significant installation space inside the battery housing 241. Therefore, the cylindrical battery 240 including the lead 245 has low space efficiency, so there is a limit in increasing the energy density.

Moreover, in order to connect the conventional tab-less cylindrical batteries 240 in series and/or parallel, it is necessary to connect a bus bar component to the cap plate 242a of the sealing body 242 and the bottom surface of the housing 241, so space efficiency is reduced. A battery pack mounted to an electric vehicle includes hundreds of cylindrical batteries 240. Accordingly, the inefficiency of the electrical wiring causes considerable inconvenience in the electric vehicle assembling process and the maintenance of the battery pack.

On the other hand, by applying a conventional positive electrode active material containing secondary particles, particle breakage may occur during electrode manufacturing, and the amount of gas generated due to internal cracking during charging and discharging may increase, which may cause problems with battery stability.

To solve this problem, a positive electrode active material in the form of a single particle or pseudo-single particle having a relatively large primary particle size has been developed. However, if the positive electrode active material in the form of a single particle or pseudo-single particle is applied to a high loading electrode and then rolling is performed, there is a problem in that the electrode is broken in a state where the electrode porosity is not achieved to a target level, and there is a problem in that the resistance characteristics and charge/discharge efficiency of the lithium secondary battery are not good.

DISCLOSURE

Technical Problem

The present disclosure is designed to solve the problems of the related art, and therefore the present disclosure is directed to preventing damage to a coupling portion between components by, even if external impact and/or vibration is applied during the use of a secondary battery, dispersing the impact and/or vibration not to be concentrated in a specific area.

The present disclosure is also directed to allowing a current collecting plate itself to perform a current blocking function without additional installation of a current blocking member, so that the current is quickly cut off when an overcurrent occurs due to a short circuit or the like, thereby improving the safety of during the use of a secondary battery.

The present disclosure is designed to solve the problems of the related art, and the present disclosure is also directed to reducing the internal resistance of the cylindrical battery cell and increase the energy density by improving the electrode terminal structure of the cylindrical battery to increase space efficiency in the battery housing.

The present disclosure is also directed to solving the internal heating problem during rapid charging by improving the electrode terminal structure of the cylindrical battery cell to enlarge the cross-sectional area of the current path.

The present disclosure is also directed to providing a cylindrical battery cell with an improved structure capable of performing electrical wiring work for serial and/or parallel connection of cylindrical battery cells on one side of the cylindrical battery cells.

The present disclosure is also directed to providing a battery pack manufactured using the cylindrical battery cells having an improved structure and a vehicle including the battery pack.

The present disclosure is also directed to providing an electrode assembly with improved energy density by including a silicon-based negative electrode active material in the negative electrode.

The present disclosure is also directed to providing an electrode assembly in which the range of the positive electrode active material portion is increased without worrying about lithium precipitation.

The present disclosure is also directed to providing a cylindrical battery capable of exhibiting excellent thermal stability even when the volume of the battery increases due to an increase in form factor.

However, the technical object to be solved by the present disclosure is not limited to the above, and other objects not mentioned herein will be clearly understood by those skilled in the art from the following disclosure.

Technical Solution

In one aspect of the present disclosure, there is provided a cylindrical battery, comprising: an electrode assembly including a first electrode having a first uncoated portion and a second electrode having a second uncoated portion; a battery housing configured to accommodate the electrode assembly through an open portion formed in one side and electrically connected to the second uncoated portion; a cap plate configured to seal the open portion of the battery housing; a current collecting plate having a rim portion, an uncoated portion coupling portion extending inwardly from the rim portion and coupled to the first uncoated portion, and a terminal coupling portion spaced apart from the uncoated portion coupling portion; an electrode terminal riveted through a perforated hole formed in a closed portion provided opposite to the open portion of the battery housing and coupled to the terminal coupling portion; and an insulating gasket interposed between the electrode terminal and the perforated hole,

wherein the electrode terminal includes: a body portion inserted into the perforated hole; an outer flange portion configured to extend along an outer surface of the closed portion from a circumference of one side of the body portion exposed through the outer surface of the closed portion of the battery housing; an inner flange portion configured to extend toward an inner surface of the closed portion from a circumference of the other side of the body portion exposed through the inner surface of the closed portion; and a flat portion provided on an inner side of the inner flange portion and coupled to the terminal coupling portion.

The uncoated portion coupling portion and the terminal coupling portion may be electrically connected by the rim portion.

The terminal coupling portion may be located in the center of an inner space of the rim portion.

The current collecting plate may further include a connection portion extending inwardly from the rim portion and connected to the terminal coupling portion.

The connection portion may have a notching portion formed to reduce the width of the connection portion.

The uncoated portion coupling portion may be coupled onto a coupling surface formed by bending an end of the first uncoated portion along a direction parallel to the current collecting plate.

The cap plate may not be electrically connected to the electrode assembly to have no polarity.

The flat portion and the inner surface of the closed portion may be parallel to each other.

An angle between the inner flange portion and the inner surface of the closed portion may be 0 degrees to 60 degrees.

A recess portion may be provided between the inner flange portion and the flat portion.

The recess portion may have a cross-sectional structure of an asymmetric groove.

The asymmetrical groove may include a sidewall of the flat portion and an inclined surface of the inner flange portion connected to an end of the sidewall.

The sidewall may be perpendicular to the inner surface of the closed portion.

The thickness of the inner flange portion may decrease as being away from the body portion.

The insulating gasket may include an outer gasket interposed between the outer flange portion and the outer surface of the closed portion; and an inner gasket interposed between the inner flange portion and the inner surface of the closed portion, and the inner gasket and the outer gasket may have different thicknesses depending on positions thereof.

Among the area of the inner gasket, an area interposed between an inner edge of the perforated hole connected to the inner surface of the closed portion and the inner flange portion may have a relatively smaller thickness than other area.

The inner edge of the perforated hole may include an opposing surface facing the inner flange portion.

The inner gasket may extend longer than the inner flange portion.

Based on the inner surface of the closed portion, the height of the flat portion may be greater than or equal to the height of an end of the inner gasket.

Based on the inner surface of the closed portion, the height of the flat portion may be greater than or equal to the height of an end of the inner flange portion.

The active material layer of the first electrode may include a positive electrode active material containing a single particle, a pseudo-single particle, or a combination thereof, $D_{min}$, which a minimum particle size in a cumulative volume distribution of the positive electrode active material, may be 1.0 $\mu$m or more; in the volume cumulative distribution of the positive electrode active material, $D_{50}$, which is a particle size when a volume cumulative amount is 50%, may be 5.0 $\mu$m or less, and $D_{max}$, which is a maximum particle size in the volume cumulative distribution of the positive electrode active material, may be 12 $\mu$m to 17 $\mu$m.

The positive electrode active material may have a unimodal particle size distribution showing a single peak in a volume cumulative particle size distribution graph, and the particle size distribution (PSD) represented by the following formula may be 3 or less:

$$PSD = (D_{max} - D_{min})/D_{50}.$$

The single particle, the pseudo-single particle, or the combination thereof may be included in an amount of 95 wt% to 100 wt% based on the total weight of the positive electrode active material included in the active material layer of the first electrode.

The positive electrode active material may include a lithium nickel-based oxide containing 80 mol% or more of Ni based on the total number of moles of a transition metal.

The active material layer of the first electrode may have a porosity of 15% to 23%, and the active material layer of the first electrode may contain flake graphite in a weight ratio of 0.05 wt% to 5 wt%.

The active material layer of the first electrode may further contain carbon nanotubes.

The active material layer of the second electrode may include a silicon-based negative electrode active material and a carbon-based negative electrode active material, and the silicon-based negative electrode active material and the carbon-based negative electrode active material may be included in a weight ratio of 1 : 99 to 20 : 80.

In another aspect of the present disclosure, there is also provided a battery pack, comprising a cylindrical battery according to an embodiment of the present disclosure as above, and a pack housing configured to accommodate the plurality of cylindrical batteries.

In another aspect of the present disclosure, there is also provided a vehicle, comprising the battery pack according to an embodiment of the present disclosure as above.

Advantageous Effects

According to an aspect of the present disclosure, it is possible to prevent damage to a coupling portion between components by, even if external impact and/or vibration is applied during the use of a secondary battery, dispersing the impact and/or vibration not to be concentrated in a specific area.

According to another aspect of the present disclosure, it is possible to allow a current collecting plate itself to perform a current blocking function without additional installation of a current blocking member, so that the current is quickly cut off when an overcurrent occurs due to a short circuit or the like, thereby improving the safety of during the use of a secondary battery.

According to an aspect of the present disclosure, by improving the electrode terminal structure of the cylindrical battery cell to increase the space efficiency in the housing, it is possible to lower the internal resistance of the cylindrical battery cell and increase the energy density.

According to another aspect of the present disclosure, by improving the structure of the electrode terminal of the cylindrical battery cell to enlarge the sectional area of the current path, it is possible to improve the problem of internal heat generated during rapid charging.

According to still another aspect of the present disclosure, an electrical wiring operation for serial and/or parallel connection of the cylindrical battery cells may be performed at one side of the cylindrical battery cells.

According to still another aspect of the present disclosure, it is possible to provide a battery pack manufactured using the cylindrical battery cell having an improved structure and a vehicle including the same.

According to still another aspect of the present disclosure, since the positive electrode includes positive electrode active material powder having $D_{min}$ of 1.0 $\mu$m or more, thermal safety of the battery may be further improved. According to the study by inventors of the present discloser, even if a single particle and/or pseudo-single particle is applied as the positive electrode active material, the effect of suppressing particle breakage and improving thermal safety after rolling is different depending on the particle size of the positive electrode active material powder. In particular, when particles with a particle diameter of less than 1.0 $\mu$m are included in the positive electrode active material powder, the line pressure increases during the rolling process, resulting in increased particle breakage and reduced thermal stability, so it is impossible to sufficiently secure thermal stability when applying a large-sized cylindrical battery. Therefore, in the present disclosure, the effect of improving thermal safety can be maximized by using a positive electrode active material powder having a minimum particle size ($D_{min}$) controlled to 1.0 $\mu$m or more.

According to still another aspect of the present disclosure, since the positive electrode contains a positive electrode active material powder whose $D_{50}$, $D_{max}$, and particle size distribution (PSD) are appropriately adjusted so as to minimize the increase in resistance due to single particle application, it is possible to implement excellent capacity characteristics and power characteristics.

According to still another aspect of the present disclosure, the conductivity of the electrode can be improved by including a single particle-based positive electrode active material coated with a conductive coating layer or by containing novel CNT as a conductive material.

According to still another aspect of the present disclosure, since the positive electrode active material layer contains flake graphite, when the positive electrode active material layer is rolled, the flake graphite provides a sliding effect to the positive electrode active material, so that the rolling properties of the electrode are improved, and the electrode porosity can be lowered to the target level. Accordingly, stability, initial resistance characteristics, and charge/discharge efficiency of the cylindrical battery are improved.

According to still another aspect of the present disclosure, a higher energy density can be implemented by including a silicon-based negative electrode active material with a large capacity in the negative electrode.

According to still another aspect of the present disclosure, since a loading reduction portion with a small loading amount of the positive electrode active material is included in the positive electrode, the range of the positive electrode active material portion can be increased without worrying about lithium precipitation.

According to still another aspect of the present disclosure, compared to a conventional battery having a strip-shaped electrode tab, internal heat generation of the battery can be effectively reduced, so the thermal safety of the battery can be improved.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a plan view showing a structure of an electrode used for a conventional tab-less cylindrical battery.
FIG. 2 is a diagram showing a process of winding an electrode assembly included in the conventional tab-less cylindrical battery.
FIG. 3 is a diagram showing a process of welding a current collecting plate to a bent surface of an uncoated portion in the electrode assembly.
FIG. 4 is a sectional view showing a conventional tab-less cylindrical battery, taken along a longitudinal direction Y.
FIG. 5 is a perspective view showing a cylindrical battery according to an embodiment of the present disclosure and a bus bar for electrically connecting a plurality of cylindrical batteries.
FIG. 6 is a partial cross-sectional view showing an upper structure of a cylindrical battery according to an embodiment of the present disclosure.

FIG. 7 is a partial cross-sectional view showing a cylindrical battery according to an embodiment of the present disclosure.

FIG. 8 is a diagram showing that the electrode assembly of the present disclosure is coupled to a current collecting plate (first current collecting plate).

FIGS. 9 to 12 are diagrams showing various forms of the current collecting plate (first current collecting plates) according to an embodiment of the present disclosure.

FIGS. 13 and 14 are diagrams showing various forms of a current collecting plate (first current collecting plates) according to another embodiment of the present disclosure.

FIG. 15 is a partial cross-sectional view showing a lower structure of a cylindrical battery according to an embodiment of the present disclosure.

FIG. 16 is a diagram showing a lower surface of a cylindrical battery according to an embodiment of the present disclosure.

FIG. 17 is a schematic view showing a battery pack according to an embodiment of the present disclosure.

FIG. 18 is a schematic view showing a vehicle according to an embodiment of the present disclosure.

FIG. 19 is a cross-sectional view showing a riveting structure of the electrode terminal according to an embodiment of the present disclosure.

FIG. 20 is an enlarged cross-sectional view showing a portion indicated by a dotted circle in FIG. 19.

FIG. 21 is a cross-sectional view showing the cylindrical battery cell according to an embodiment of the present disclosure, taken along the longitudinal direction Y.

FIG. 22 is a plan view showing an electrode structure according to a preferred embodiment of the present disclosure.

FIG. 23 is a cross-sectional view, taken along the longitudinal direction Y, showing an electrode assembly in which a segment structure of the uncoated portion of the electrode according to an embodiment of the present disclosure is applied to the first electrode and the second electrode.

FIG. 24 is a cross-sectional view, taken along the longitudinal direction Y, showing the electrode assembly in which the uncoated portion is bent according to an embodiment of the present disclosure.

FIG. 25 is a scanning electron microscope (SEM) photograph showing a carbon nanotube (existing CNT) commonly used in the prior art.

FIG. 26 is a SEM photograph showing a novel CNT according to an embodiment of the present disclosure.

FIG. 27 is a table showing the comparison of physical properties of the existing CNT and the new CNT.

FIGS. 28 to 31 are graphs showing sheet resistance and high-temperature life characteristics for each conductive material ratio when single particle-based active material particles are applied as the positive electrode active material.

FIG. 32 is a table comparatively showing the solid content and viscosity of the positive electrode slurry and the resistance values of the MP coating layer and the MP interface layer when carbon nanotubes (new CNT) with a BET specific surface area of 300 $m^2/g$ to 500 $m^2/g$ are applied and when carbon nanotubes (existing CNT) with a BET of 200 $m^2/g$ or more and less than 300 $m^2/g$ are applied.

FIG. 33 is a SEM picture showing a positive electrode active material used in Example 2-1 of the present disclosure.

FIG. 34 is a SEM picture showing a positive electrode active material used in Example 2-2 of the present disclosure.

FIG. 35 is a SEM picture showing a positive electrode active material used in Comparative Example 2-2 of the present disclosure.

FIG. 36 is a graph showing a hot box test result of a 4680 cell manufactured by Example 1 of the present disclosure.

FIG. 37 is a graph showing a hot box test result of a 4680 cell manufactured by Comparative Example 1.

FIG. 38 is a graph showing hot box test results of Sample 1 of Example 2-1 of the present disclosure and a 4680 cell manufactured by Comparative Example 2-1.

FIG. 39 is a graph showing hot box test results of Samples 2 and 3 of Example 2-1 of the present disclosure, Samples 1 and 2 of Example 2-2, and a 4680 cell manufactured by Comparative Example 2-2.

FIG. 40 is a cross-sectional SEM picture of the positive electrode manufactured in Example 2-1 of the present disclosure.

FIG. 41 is a cross-sectional SEM picture of the positive electrode manufactured in Comparative Example 2-1.

FIG. 42 is a graph showing the results of measuring resistance characteristics according to SOC while charging a coin half-cell including a positive electrode according to Example 3-3 of the present disclosure, Comparative Example 3-1 and Comparative Example 3-2 to 4.2V.

FIG. 43 is a graph showing the measurement result of capacity retention and resistance increase (DCIR increase) obtained through a charge/discharge cycle experiment for a 4680 cell according to Example 3-1 and Example 3-3 of the present disclosure, and Comparative Example 3-1.

FIG. 44 is a diagram showing an electrode assembly according to an embodiment of the present disclosure.

FIG. 45 is a cross-sectional view, taken along the cutting line A-A' in FIG. 44.

FIGS. 46 and 47 are diagrams showing a process of manufacturing a negative electrode according to an embodiment of the present disclosure.

FIG. 48 is a perspective view showing a negative electrode according to an embodiment of the present disclosure.

FIGS. 49 and 50 are diagrams showing a process of manufacturing a positive electrode according to an embodiment of the present disclosure.

FIG. 51 is a perspective view showing a positive electrode according to an embodiment of the present disclosure.

FIG. 52 is a diagram showing an electrode assembly according to a comparative example.

FIG. 53 is a cross-sectional view, taken along the cutting line B-B' in FIG. 52.

FIG. 54 is a diagram showing a process of manufacturing a negative electrode according to a comparative example.

FIG. 55 is a diagram showing a process of manufacturing a positive electrode according to a comparative example.

FIG. 56 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help the understanding of the present disclosure, the accompanying drawings are not drawn to scale, but dimensions of some components may be exaggerated. Also, the same reference signs may be assigned to the same components in different embodiments.

Since the size and thickness of each component shown in the drawings are arbitrarily illustrated for convenience of description, the present disclosure is not necessarily limited to the drawings. In the drawings, the thickness is shown enlarged to clearly express the various layers and regions. In addition, in the drawings, for convenience of explanation, the thicknesses of some layers and regions are exaggerated.

In addition, when a part such as a layer, film, region, plate, etc. is described to be "above" or "on" another part, this includes not only the case where it is "directly on" another part, but also the case where still another part exists therebetween. Conversely, when a part is described to be "directly on" another part, it means that there is no other part therebetween. In addition, to be "above" or "on" a reference part means to be located above or below the reference part, and does not mean to be located "above" or "on" in a direction opposite to gravity.

In addition, throughout the specification, when a certain part is described to "include" a certain component, it means that it may further include other components without excluding other components, unless otherwise stated.

In addition, throughout the specification, when it is referred to as "in a planar form", it means when the target part is viewed from above, and when it is referred to as "in a cross-sectional form", it means when the target part is vertically cut and viewed from the side.

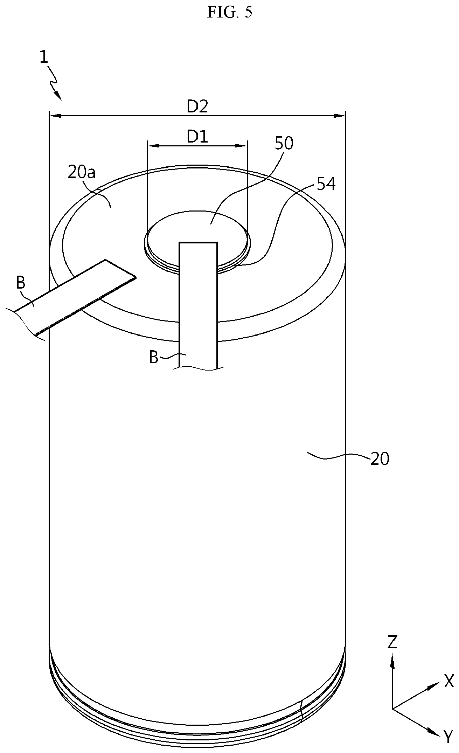

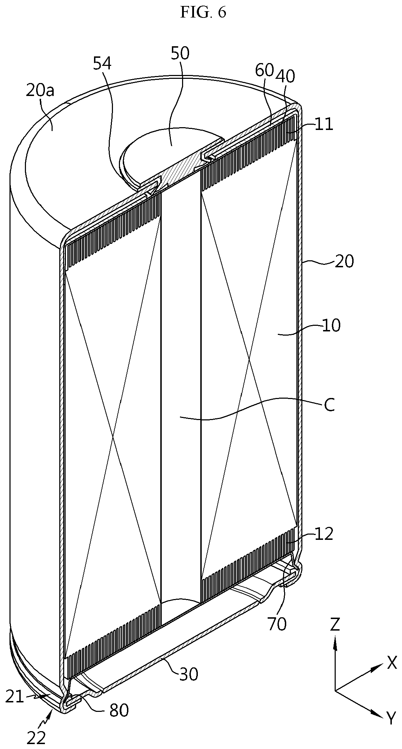

Referring to FIGS. 5 and 6, the cylindrical battery 1 according to an embodiment of the present disclosure includes an electrode assembly 10, a battery housing 20, a cap plate 30, a current collecting plate (first current collecting plate) 40, and an electrode terminal 50. The cylindrical battery 1 may further include a sealing gasket 80 and/or an insulating gasket 54 and/or an insulator 60 and/or a second current collecting plate 70 in addition to the components described above.

The electrode assembly 10 includes a first electrode having a first uncoated portion (first electrode tab) 11 and a second electrode having a second uncoated portion (second electrode tab) 12. The electrode uncoated portion or the uncoated portion referred to below means an electrode tab. The electrode assembly 10 may include a first electrode having a first polarity, a second electrode having a second polarity, and a separator interposed between the first electrode and the second electrode. The electrode assembly 10 may be manufactured by winding a stack, which is formed by sequentially stacking the first electrode, the separator and the second electrode, at least once. That is, the electrode assembly 10 applied to the present disclosure may be a jelly-roll type electrode assembly. In this case, an additional separator may be provided on the outer circumference of the electrode assembly 10 to insulate the electrode assembly 10 from the battery housing 20.

The first electrode includes a first electrode current collector and a first electrode active material coated on one surface or both surfaces of the first electrode current collector. At one end in the width direction (direction parallel to the height direction of the cylindrical battery 1 shown in FIG. 6) of the first electrode current collector, there is a first uncoated portion 11 on which the first electrode active material is not coated. The first uncoated portion 11 serves as a first electrode tab. The first uncoated portion 11 is provided to an upper portion in the height direction (direction parallel to the height direction of the cylindrical battery 1 shown in FIG. 6) of the electrode assembly 10 accommodated in the battery housing 20. The first uncoated portion 11 may be, for example, a positive electrode uncoated portion.

The second electrode includes a second electrode current collector and a second electrode active material coated on one surface or both surfaces of the second electrode current collector. At the other end in the width direction (direction parallel to the height direction of the cylindrical battery 1 shown in FIG. 6) of the second electrode current collector, there is a second uncoated portion 12 on which the second electrode active material is not coated. The second uncoated portion serves as a second electrode tab. The second uncoated portion 12 is provided to a lower portion in the height direction of the electrode assembly 10 accommodated in the battery housing 20. The second uncoated portion 12 may be, for example, a negative electrode uncoated portion.

In the present disclosure, the positive electrode active material coated on the positive electrode and the negative electrode active material coated on the negative electrode may use any active materials known in the art without limitation.

The battery housing 20 is a substantially cylindrical container with an open portion formed at a lower side, and is made of, for example, a conductive material such as metal. The material of the battery housing 20 may be, for example, aluminum. An open portion is formed at a lower end in the height direction of the battery housing 20, and a closed portion 20a is formed at an upper end. The battery housing 20 accommodates the electrode assembly 10 through the open portion formed at the lower side and accommodates the electrolyte together.

The battery housing 20 is electrically connected to the electrode assembly 10. The battery housing 20 is electrically connected to the second uncoated portion 12 of the electrode assembly 10, for example. Accordingly, the battery housing 20 may have the same polarity as the second uncoated portion 12.

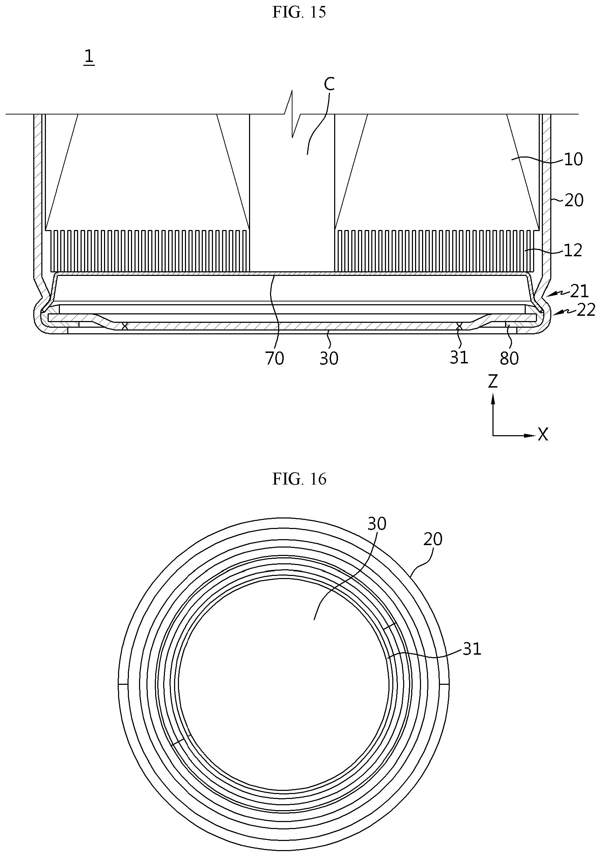

Referring to FIGS. 6 and 15, the battery housing 20 may include a beading portion 21 and a crimping portion 22 formed at a lower end thereof. The beading portion 21 is located in the lower portion of the electrode assembly 10. The beading portion 21 is formed by press-fitting the periphery of the outer circumference of the battery housing 20. The beading portion 21 prevents the electrode assembly 10, which may have a size approximately corresponding to the width of the battery housing 20, from escaping through the open portion formed at the lower end of the battery housing 20, and functions as a support on which the cap plate 30 is seated.

The crimping portion 22 is formed below the beading portion 21. The crimping portion 22 has an extended and bent shape to surround the outer circumference of the cap plate 30 disposed below the beading portion 21 and a part of the lower surface of the cap plate 30.

However, the present disclosure does not exclude the case where the battery housing 20 does not include the beading portion 21 and/or the crimping portion 22. In the present disclosure, when the battery housing 20 does not include the beading portion 21 and/or the crimping portion 22, the electrode assembly 10 may be fixed and/or the cap plate 30 may be fixed and/or the battery housing 20 may be sealed by, for example, additionally applying a component that may function as a stopper for the electrode assembly 10 and/or additionally applying a structure on which the cap plate 30 may be seated and/or welding the battery housing 20 and the cap plate 30 to each other.

The closed end of the battery housing 20, namely a region forming the upper surface, may have a thickness in the range of about 0.5 mm to 1.0 mm, more preferably in the range of about 0.6 mm to 0.8 mm. The sidewall of the battery housing 20 forming the outer circumference may have a thickness in the range of about 0.3 mm to 0.8 mm, more preferably in the range of about 0.40 mm to 0.60 mm. According to an embodiment of the present disclosure, a plating layer may be formed on the battery housing 20. In this case, the plating layer may include, for example, nickel (Ni). The thickness of the plating layer may be in the range of about 1.5 $\mu$m to about 6.0 $\mu$m.

As the thickness of the battery housing 20 becomes thinner, the inner space becomes larger, and as a result, the energy density is improved, which makes it possible to manufacture a cylindrical battery 1 having a large capacity. Conversely, as the thickness becomes greater, flames do not propagate in chain to adjacent cells during an explosion test, which is more advantageous is in terms of safety.

As the plating layer becomes thinner, the plating layer is more vulnerable to corrosion, and as the plating layer becomes thicker, it is more difficult to manufacture the plating layer or the possibility of plating peeling increases. Considering all of these conditions, it is necessary to set the optimal thickness of the battery housing 20 and the optimal thickness of the plating layer. Moreover, considering all of these conditions, it is necessary to control the thickness of the closed portion 20a and the sidewall of the battery housing 20, respectively.

Referring to FIGS. 6 and 15, the cap plate 30 may be made of, for example, a metal material to secure rigidity. The cap plate 30 seals the open portion formed at the lower end of the battery housing 20. That is, the cap plate 30 forms the lower surface of the cylindrical battery 1. In the cylindrical battery 1 of the present disclosure, the cap plate 30 may not have polarity even when it is made of a metal material having conductivity. If the cap plate 30 does not have polarity, it means that the cap plate 30 is electrically insulated from the battery housing 20 and the terminal 40. As above, the cap plate 30 may not have polarity, and its material does not necessarily have to be a conductive metal.

When the battery housing 20 of the present disclosure includes the beading portion, the cap plate 30 may be seated on the beading portion 21 formed in the battery housing 20. In addition, when the battery housing 20 of the present disclosure includes the crimping portion 22, the cap plate 30 is fixed by the crimping portion 22. A sealing gasket 80 may be interposed between the cap plate 30 and the crimping portion 22 of the battery housing 20 to ensure airtightness of the battery housing 20. Meanwhile, as described above, the battery housing 20 of the present disclosure may not include the beading portion 21 and/or the crimping portion 22, and in this case, the sealing gasket 80 may be interposed between a fixing structure provided on the open portion of the battery housing 20 and the cap plate 30 to secure the airtightness of the battery housing 20.

Referring to FIGS. 15 and 16, the cap plate 30 may further include a venting portion 31 formed to prevent internal pressure from increasing beyond a preset value due to gas generated inside the battery housing 20. The venting portion 31 corresponds to an area of the cap plate 30 having a smaller thickness than the surrounding area. The venting portion 31 is structurally weak compared to the surrounding area. Therefore, when an abnormality occurs in the cylindrical battery 1 and the internal pressure of the battery housing 20 increases to a certain level or above, the venting portion 31 is ruptured so that the gas generated inside the battery housing 20 is discharged. The venting portion 31 may be formed, for example, by notching one surface or both surfaces of the cap plate 60 to partially reduce the thickness of the battery housing 20.

The cylindrical battery 1 according to an embodiment of the present disclosure has a structure in which both the positive electrode terminal and the negative electrode terminal exist on the upper portion, as will be described later, and as a result, the structure of the upper portion is more complicated than the structure of the lower portion. Accordingly, the venting portion 31 may be formed on the cap plate 30 forming the lower surface of the cylindrical battery 1 to smoothly discharge gas generated inside the battery housing 20. As shown in FIG. 15, the lower end of the cap plate 30 is preferably disposed higher than the lower end of the battery housing 20. In this case, even if the lower end of the battery housing 20 comes into contact with the ground or the bottom surface of a housing for module or pack configuration, the cap plate 30 does not touch the ground or the bottom surface of the housing for module or pack configuration. Therefore, it is possible to prevent a phenomenon in which the pressure required for rupturing the venting portion 31 differs from a design value due to the weight of the cylindrical battery 1, and accordingly, the smooth rupturing of the venting portion 31 may be secured.

Meanwhile, when the venting portion 31 has a closed loop shape as shown in FIGS. 15 and 16, it is more advantageous that the distance from the center of the cap plate 30 to the venting portion 31 is longer in terms of ease of rupture. This is because, when the same venting pressure is applied, as the distance from the center of the cap plate 30 to the venting portion 31 increases, the force acting on the venting portion 31 increases, thereby facilitating rupture. In addition, in terms of smooth discharge of the venting gas, it is more advantageous that the distance from the center of the cap plate 30 to the venting portion 31 is longer. From this point of view, it may be advantageous that the venting portion 31 is formed along the periphery of an edge of a substantially flat area, which protrudes downward (in a downward direction based on FIG. 15) from the peripheral edge area of the cap plate 30.

FIG. 16 shows a case where the venting portion 31 is continuously formed on the cap plate 30 in a substantially circular shape, but the present disclosure is not limited thereto. The venting portion 31 may be discontinuously formed on the cap plate 30 in a substantially circular shape, or may be formed in a substantially straight line shape or other shapes.

Referring to FIGS. 6 to 8, the current collecting plate (first current collecting plate) 40 is coupled to the upper portion of the electrode assembly 10. The current collecting plate 40 is made of a conductive metal material and is connected to the first uncoated portion 11.

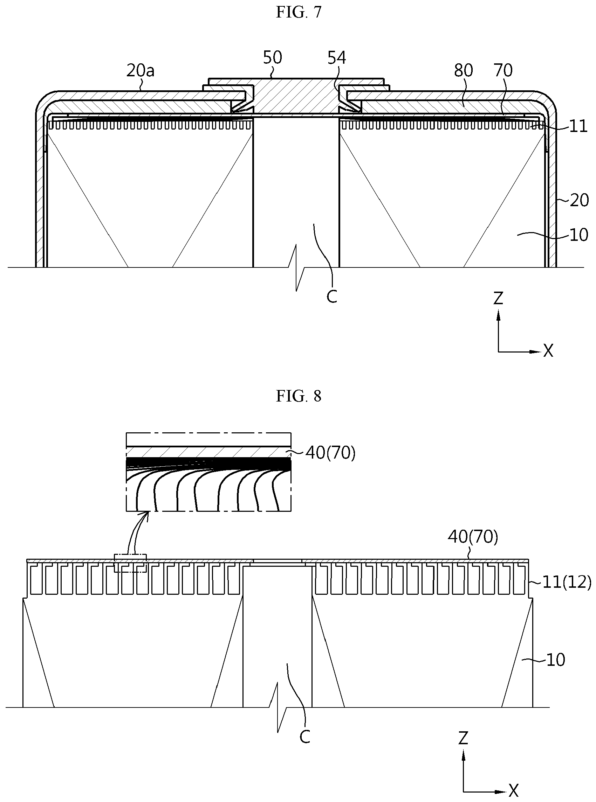

Referring to FIG. 8, the current collecting plate 40 may be coupled to a coupling surface formed by bending an end of the first uncoated portion 11 in a direction parallel to the current collecting plate 40. The bending direction of the first uncoated portion 11 may be, for example, a direction toward the winding center hole C of the electrode assembly 10. When the first uncoated portion 11 has such a bent shape, the space occupied by the first uncoated portion 11 may be reduced, thereby improving energy density. In addition, the increase in the coupling surface area between the first uncoated portion 11 and the current collecting plate 40 may result in improved bonding strength and reduced resistance.

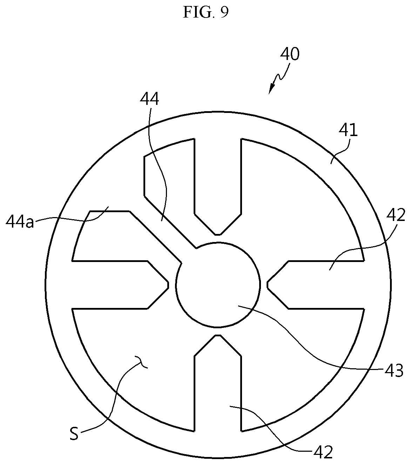

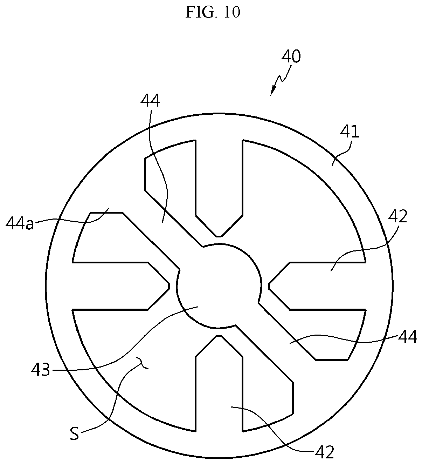

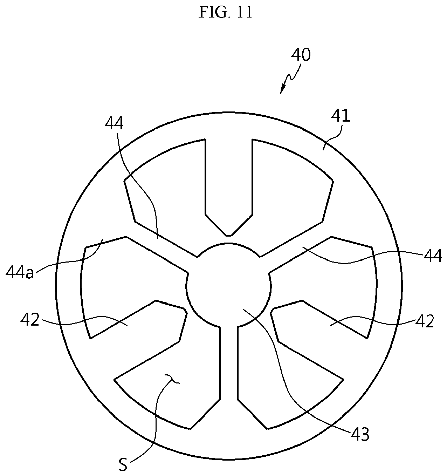

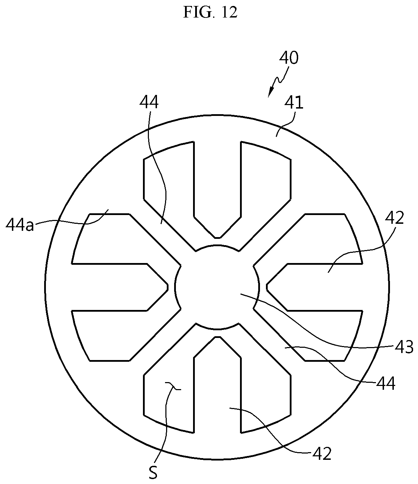

Referring to FIGS. 9 to 12 along with FIGS. 6 to 8, the current collecting plate 40 includes a rim portion 41, an uncoated portion coupling portion 42, and a terminal coupling portion 43. The rim portion 41 may have a substantially rim shape having an empty space S formed in the center. In the drawings of the present disclosure, only the case where the rim portion 41 has a substantially circular rim shape is illustrated, but the present disclosure is not limited thereto. Unlike the drawings, the rim portion 41 may have a substantially square rim shape or other shapes.

The uncoated portion coupling portion 42 extends inwardly from the rim portion 41 and is coupled to the first uncoated portion 11. The terminal coupling portion 43 is spaced apart from the uncoated portion coupling portion 42 and is located at the inner side of the rim portion 41. The terminal coupling portion 43 may be coupled to an electrode terminal 50, explained later, by welding. The terminal coupling portion 43 may be located, for example, in the center of the inner space of the rim portion 41. The terminal coupling portion 43 may be disposed at a position corresponding to the winding center hole C of the electrode assembly 10.

The uncoated portion coupling portion 42 and the terminal coupling portion 43 are not directly connected but are spaced apart from each other and electrically connected by the rim portion 41. Since the current collecting plate 40 according to an embodiment of the present disclosure has a structure in which the uncoated portion coupling portion 42 and the terminal coupling portion 43 are not directly connected to each other but connected through the rim portion 41 as described above, when impact and/or vibration is generated in the cylindrical battery 1, it is possible to disperse the impact applied to the coupling portion between the uncoated portion coupling portion 42 and the first uncoated portion 11 and the coupling portion between the terminal coupling portion 43 and the electrode terminal 50. Therefore, the current collecting plate 40 of the present disclosure may minimize or prevent damage to the welded portion caused by external impact. The current collecting plate 40 of the present disclosure has a structure in which stress can be concentrated in the connection portion of the rim portion 41 and the terminal coupling portion 43 when an external impact is applied. Here, since this connection portion is not a portion where a welding portion for coupling components is formed, it is possible to prevent product defects from occurring due to damage to the welding portion caused by external impact.

The current collecting plate 40 may further include a connection portion 44 extending inwardly from the rim portion 41 and connected to the terminal coupling portion 43. At least a part of the connection portion 44 may have a smaller width than that of the uncoated portion coupling portion 42. In this case, electrical resistance increases in the connection portion 44, and thus, when a current flows through the connection portion 44, a greater resistance is generated in the connection portion 44 compared to other portions, and as a result, when an overcurrent occurs, a part of the connection portion 44 is ruptured to block overcurrent. The width of the connection portion 44 may be adjusted to an appropriate level in consideration of the overcurrent blocking function.

The connection portion 44 may include a tapered portion 44a whose width gradually decreases in a direction from the inner surface of the rim portion 41 toward the terminal coupling portion 43. When the tapered portion 44a is provided, the rigidity of the component may be improved at the connection portion between the connection portion 44 and the rim portion 41.

The uncoated portion coupling portion 42 may be provided in plurality. The plurality of uncoated portion coupling portions 42 may be arranged at equal intervals from each other along the extending direction of the rim portion 41. Extension lengths of the plurality of uncoated portion coupling portions 42 may be equal to each other. The terminal coupling portion 43 may be arranged to be surrounded by the plurality of uncoated portion coupling portions 42. The connection portion 44 may be positioned between a pair of uncoated portion coupling portions 42 adjacent to each other. In this case, the distance from the connection portion 44 to any one of the pair of uncoated portion coupling portions 42 along the extending direction of the rim portion 41 may be equal to the distance from the connection portion 44 to the other one of the pair of uncoated portion coupling portions 42 along the extending direction of the rim portion 41.

The connection portion 44 may be provided in plurality. Each of the plurality of connection portions 44 may be disposed between a pair of uncoated portion coupling portions 42 adj acent to each other. The plurality of connection portions 44 may be arranged at equal intervals along the extending direction of the rim portion 41.

In the case where the uncoated portion coupling portion 42 and/or the connection portion 44 are provided in plurality as described above, if the distance between the uncoated portion coupling portions 42 and/or the distance between the connection portions 44 and/or the distance between the uncoated portion coupling portion 42 and the connection portions 44 are constant, the flow of a current from the uncoated portion coupling portion 42 toward the connection portion 44 or from the connection portion 44 toward the uncoated portion coupling portion 42 may be smoothly formed.

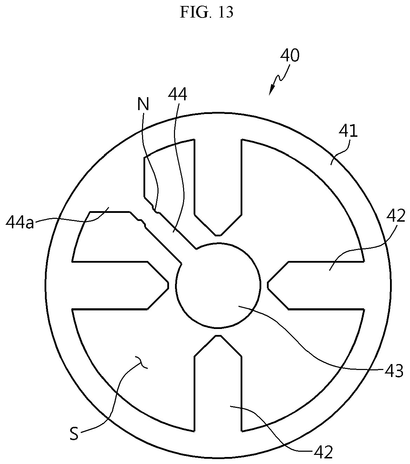

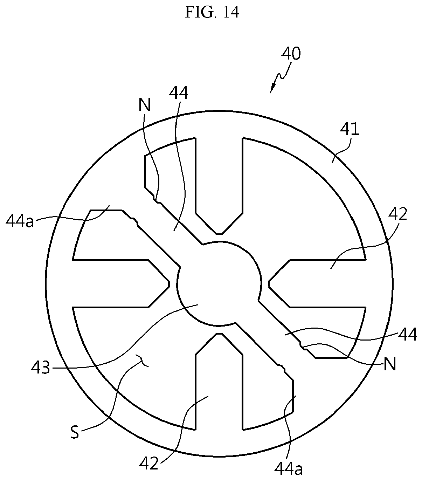

Referring to FIGS. 13 and 14, the connection portion 44 may include a notching portion N formed to partially reduce the width of the connection portion 44. When the notching portion N is provided, electrical resistance increases in the region where the notching portion N is formed, and as a result, a current can be blocked quickly when overcurrent occurs.

In the case where the connection portion 44 includes the tapered portion 44a, the notching portion N may be located closer to the tapered portion 44a than the terminal coupling portion 43. In this case, since the notching portion N is located in a region adj acent to the region where large heat is generated due to the structure of the tapered portion 44a whose width gradually narrows along a direction toward the center of the current collecting plate 40, overcurrent may be blocked more rapidly.

Referring to FIGS. 5 to 7 and 9, the electrode terminal 50 is made of a conductive metal material and is coupled to the terminal coupling portion 43 of the current collecting plate (first current collecting plate) 40. The electrode terminal 50 may be configured to penetrate the closed portion 20a located opposite to the open portion of the battery housing 20. When the cylindrical battery 1 of the present disclosure includes the insulator 60, the electrode terminal 50 is configured to penetrate the insulator 60 and be coupled with the terminal coupling portion 43 of the current collecting plate 40.

As such, the electrode terminal 50 is electrically connected to the first uncoated portion 11 of the electrode assembly 10 through the current collecting plate 40, and thus has a first polarity. Accordingly, the electrode terminal 50 may function as a first electrode terminal of the cylindrical battery 1 of the present disclosure. In addition, in the cylindrical battery 1 of the present disclosure, a substantially flat surface formed on the closed portion 20a of the battery housing 20 having a second polarity may function as a second electrode terminal. Referring to FIG. 1, a bus bar B is connected to each of the first electrode terminal 50 and the second electrode terminal of the cylindrical battery 1 of the present disclosure. In each of the first electrode terminal 50 and the second electrode terminal, in order to secure a sufficient coupling surface area for coupling with the bus bar B, the width (D 1) of a region the first electrode terminal 50 exposed to the outside of the battery housing 20 may be set in the range of approximately 10% to 60% compared to the width (D2) of the second electrode terminal, namely the upper surface of the battery housing 20.

When the electrode terminal 50 has the first polarity as above, the electrode terminal 50 is electrically insulated from the battery housing 20 having the second polarity. Electrical isolation between the electrode terminal 50 and the battery housing 20 may be realized in various ways. For example, the electric insulation may be realized by interposing the insulating gasket 35 between the electrode terminal 50 and the battery housing 20. The insulating gasket 54 may be made of, for example, an insulating resin material.

Alternatively, the insulation may also be realized by forming an insulating coating layer on a part of the electrode terminal 50. Alternatively, a method of structurally firmly fixing the electrode terminal 50 may be applied so that contact between the electrode terminal 50 and the battery housing 20 is impossible. Alternatively, several methods among the methods described above may be applied together.

Referring to FIGS. 6, 7 and 9 together, the insulator 60 may be provided between the current collecting plate (first current collecting plate) 40 and the inner surface of the battery housing 20. The insulator 60 prevents contact between the current collecting plate 40 and the battery housing 20. The insulator 60 may also be interposed between the upper end of the outer circumference of the electrode assembly 10 and the inner surface of the battery housing 20. This is to prevent contact between the first uncoated portion 11 extending toward the closed portion 20a of the battery housing 20 and the inner circumference of the battery housing 20.

When the cylindrical battery 1 of the present disclosure includes the insulator 60, the electrode terminal 50 passes through the insulator 60 and is coupled to the current collecting plate 40. In order to allow the electrode terminal 50 to pass through, the insulator 60 may have an opening formed at a position corresponding to the terminal coupling portion 43 of the current collecting plate 40.

Referring to FIG. 15, the current collecting plate (second current collecting plate) 70 is coupled to the lower portion of the electrode assembly 10. The current collecting plate 70 is made of a conductive metal material and is coupled with the second uncoated portion 12. In addition, the current collecting plate 70 is electrically connected to the battery housing 20. A periphery edge region of the current collecting plate 70 may be interposed and fixed between the inner surface of the battery housing 20 and the sealing gasket 80. In this case, the current collecting plate 70 may be welded on the seating surface formed by the beading portion 21 of the battery housing 20.

Referring to FIG. 8, the current collecting plate 70 may be coupled onto the coupling surface formed by bending an end of the second uncoated portion 12 in a direction parallel to the current collecting plate 70. The bending direction of the second uncoated portion 12 may be, for example, a direction toward the winding center hole C of the electrode assembly 10. When the second uncoated portion 12 has such a bent shape, the space occupied by the second uncoated portion 12 may be reduced, thereby improving energy density. In addition, according to this embodiment, coupling strength between the second uncoated portion 12 and the current collecting plate 70 may be improved and resistance may be reduced.

Preferably, the cylindrical battery cell 1 may be, for example, a battery cell whose form factor ratio (defined as a value obtained by dividing the diameter of a cylindrical battery cell by height, namely a ratio of height (H) to diameter (Φ)) is greater than about 0.4.

Here, the form factor means a value indicating the diameter and height of a cylindrical battery cell. The form factor of the cylindrical battery cell according to an embodiment of the present disclosure may be, for example, 46110 cell, 48750 cell, 48110 cell, 48800 cell, or 46800 cell. In the numerical value representing the form factor, first two numbers indicate the diameter of the cell, next two numbers indicate the height of the cell, and the last number '0' indicates that the cell has a cylindrical section.

A battery cell according to an embodiment of the present disclosure may be a battery cell having an approximately cylindrical shape, whose diameter is approximately 46 mm, height is approximately 110 mm, and form factor ratio is 0.418.

A battery cell according to another embodiment may be a battery cell having an approximately cylindrical shape, whose diameter is about 48 mm, height is about 75 mm, and form factor ratio is 0.640.

A battery cell according to still another embodiment may be a battery cell having an approximately cylindrical shape, whose diameter is approximately 48 mm, height is approximately 110 mm, and form factor ratio is 0.436.

A battery cell according to still another embodiment may be a battery cell having an approximately cylindrical shape, whose diameter is approximately 48 mm, height is approximately 80 mm, and form factor ratio is 0.600.

A battery cell according to still another embodiment may be a battery cell having an approximately cylindrical shape, whose diameter is approximately 46 mm, height is approximately 80 mm, and form factor ratio is 0.575.

Conventionally, battery cells having a form factor ratio of about 0.4 or less have been used. That is, conventionally, for example, 18650 cell, 21700 cell, etc. were used. The 18650 cell has a diameter of approximately 18 mm, height of approximately 65 mm, and a form factor ratio of 0.277. The 21700 cell has a diameter of approximately 21 mm, a height of approximately 70 mm, and a form factor ratio of 0.300.

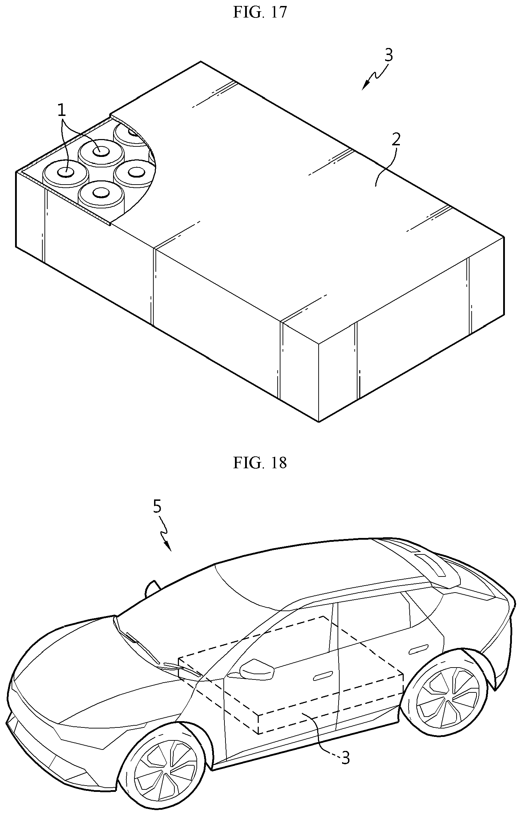

Referring to FIG. 17, a battery pack 3 according to an embodiment of the present disclosure includes a secondary battery assembly in which a plurality of cylindrical batteries 1 according to an embodiment of the present disclosure as described above are electrically connected, and a pack housing 2 for accommodating the secondary battery assembly. In the drawing of the present disclosure, components for electrical connection such as a bus bar, a cooling unit and a power terminal are not depicted for convenience of illustration.

Referring to FIG. 18, a vehicle 5 according to an embodiment of the present disclosure may be, for example, an electric vehicle, a hybrid electric vehicle or a plug-in vehicle, and includes the battery pack 3 according to an embodiment of the present disclosure. The vehicle 5 includes a four-wheeled vehicle and a two-wheeled vehicle. The vehicle 5 operates by receiving a power from the battery pack 3 according to an embodiment of the present disclosure.

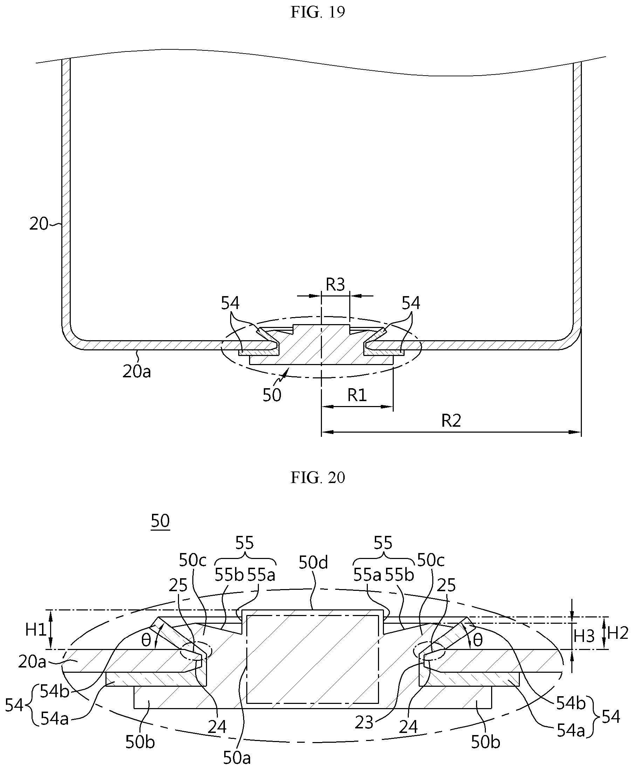

Next, with reference to FIGS. 19 to 24, the cylindrical battery 1 explained above will be described in more detail.

As described above, the cylindrical battery according to an embodiment of the present disclosure may include an electrode terminal riveted to the bottom of a battery housing.

FIG. 19 is a cross-sectional view showing a riveting structure of the electrode terminal 50 according to an embodiment of the present disclosure, and FIG. 20 is an enlarged cross-sectional view showing a portion indicated by a dotted circle.

Referring to FIGS. 19 and 20, the riveting structure of the electrode terminal 50 according to an embodiment may include a cylindrical battery housing 20 with one side open, an electrode terminal 50 riveted through a perforated hole 23 formed in the closed portion 20a of the battery housing 20, and an insulating gasket 54 interposed between the electrode terminal 50 and the perforated hole 23.

The battery housing 20 is made of a conductive metal material. In one example, the battery housing 20 may be made of steel, but the present disclosure is not limited thereto.

The electrode terminal 50 is made of a conductive metal material. In one example, the electrode terminal 50 may be made of aluminum, but the present disclosure is not limited thereto.

The insulating gasket 54 may be made of a polymer resin having insulation and elasticity. In one example, the insulating gasket 54 may be made of polypropylene, polybutylene terephthalate, polyfluorinated ethylene, etc., but the present disclosure is not limited thereto.

Preferably, the electrode terminal 50 includes a body portion 50a inserted into the perforated hole 23, an outer flange portion 50b extending along an outer surface from a circumference of one side of the body portion 50a exposed through the outer surface of the closed portion 20a of the battery housing 20, an inner flange portion 50c extending toward the inner surface from a circumference of the other side of the body portion 50a exposed through the inner surface of the closed portion 20a of the battery housing 20, and a flat portion 50d provided on an inner side of the inner flange portion 50c.

Preferably, the flat portion 50d and the inner surface of the closed portion 20a of the battery housing 20 may be parallel to each other. Here, 'parallel' means substantially parallel when observed with the naked eye.

According to one aspect, an angle ($\theta$) between the inner flange portion 50c and the inner surface of the closed portion 20a of the battery housing 20 may range from 0 degrees to 60 degrees. The size of the angle is determined by the caulking strength when the electrode terminal 50 is installed in the perforated hole 23 of the battery housing 20 by the caulking method. In one example, the angle $\theta$ may decrease to 0 degree as the caulking strength increases. If the angle exceeds 60 degrees, the sealing effect of the insulating gasket 54 may deteriorate.

According to another aspect, a recess portion 55 may be provided between the inner flange portion 50c and the flat portion 50d. The recess portion 55 may have a cross-sectional structure of an asymmetric groove. In one example, the asymmetric groove may be approximately V-shaped. The asymmetric groove may include a sidewall 55a of the flat portion 50d and an inclined surface 55b of the inner flange portion 50c connected to an end of the sidewall 55a. The sidewall 55a may be substantially perpendicular to the inner surface of the closed portion 20a of the battery housing 20. 'Perpendicular' means substantially perpendicular when observed with the naked eye. The recess portion 55 is made by the shape of a caulking jig when the electrode terminal 50 is installed in the perforated hole 23 of the battery housing 20 by the caulking method.

Preferably, the thickness of the inner flange portion 50c may decrease as the distance from the body portion 50a of the electrode terminal 50 increases.

According to another aspect, the insulating gasket 54 includes an outer gasket 54a interposed between the outer flange portion 50b and the outer surface of the closed portion 20a of the battery housing 20, and an inner gasket 54b interposed between the inner flange portion 50c and the inner surface of the closed portion 20a of the battery housing 20.

The outer gasket 54a and the inner gasket 54b may have different thicknesses depending on positions. Preferably, a thickness of a region of the inner gasket 54b interposed between the inner edge 24 of the perforated hole 23 connected to the inner surface of the closed portion 20a of the battery housing 20 and the inner flange portion 50c may be relatively small. Preferably, a minimum thickness point may exist in a gasket region interposed between the inner edge 24 of the perforated hole 23 and the inner flange portion 50c. In addition, the inner edge 24 of the perforated hole 23 may include an opposing surface 25 facing the inner flange portion 50c.

Meanwhile, the upper and lower ends of the inner wall of the perforated hole 23 perpendicular to the closed portion 20a of the battery housing 20 are chamfered (corner-cut) to form a tapered surface toward the electrode terminal 50. However, the upper end and/or lower end of the inner wall of the perforated hole 23 may be deformed into a smooth curved surface with curvature. In this case, stress applied to the gasket 54 near the upper end and/or lower end of the inner wall of the perforated hole 23 may be more alleviated.

Preferably, the inner gasket 54b may extend longer than the inner flange portion 50c while forming an angle of 0 to 60 degrees with the inner surface of the closed portion 20a of the battery housing 20.

In another aspect, a height H1 of the flat portion 50d may be equal to or greater than a height H2 of the end of the inner gasket 54b based on the inner surface of the closed portion 20a of the battery housing 20. Also, the height H1 of the flat portion 50d may be equal to or greater than a height H3 of the end of the inner flange portion 50c based on the inner surface of the closed portion 20a of the battery housing 20.

When the height parameters H1, H2, and H3 satisfy the above condition, it is possible to prevent the inner flange portion 50c and the inner gasket 54b from interfering with other parts.

In another aspect, a radius (R1) from the center of the body portion 50a of the electrode terminal 50 to the edge of the outer flange portion 50b may be 10% to 60% based on a radius (R2) of the closed portion 20a of the battery housing 20.

When R1 is small, the welding space becomes insufficient when electric wiring parts (bus bar) are welded to the electrode terminal 50. In addition, when R1 is large, the welding space is reduced when electric wiring parts (bus bar) are welded to the outer surface of the closed portion 20a of the battery housing 20 excluding the electrode terminal 50.

When the ratio R1/R2 is adjusted between 10% and 60%, it is possible to appropriately secure a welding space for the electrode terminal 50 and the outer surface of the closed portion 20a of the battery housing 20.

In addition, the radius (R3) from the center of the body portion 50a of the electrode terminal 50 to the edge of the flat portion 50d may be 4% to 30% based on the radius (R2) of the closed portion 20a of the battery housing 20.

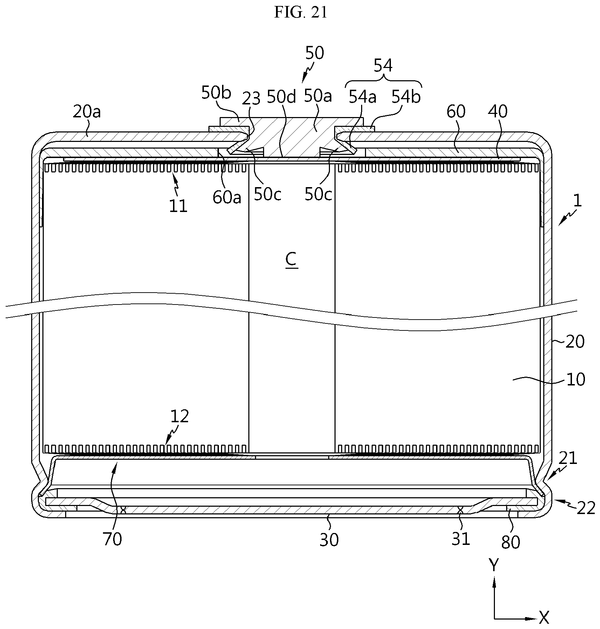

If R3 is small, the welding space becomes insufficient when the current collecting plate (first current collecting plate) 40 (FIG. 21) is welded to the flat portion 50d of the electrode terminal 50, and the welding area of the electrode terminal 50 decreases, so that the contact resistance may increase. In addition, R3 should be smaller than R1, and if R3 is large, the thickness of the inner flange portion 50c becomes thin, so that the force of the inner flange portion 50c compressing the insulating gasket 54 is reduced, thereby deteriorating the sealing ability of the insulating gasket 54.

If R3/R2 is adjusted between 4% and 30%, the welding process may be easily performed by securing a sufficient welding area between the flat portion 50d of the electrode terminal 50 and the current collecting plate 40 (FIG. 21), and it is possible to reduce contact resistance of the welding area and prevent deterioration of the sealing performance of the insulating gasket 54.

According to an embodiment of the present disclosure, the riveting structure of the electrode terminal 50 may be formed using a caulking jig that moves up and down. First, a preform (not shown) of the electrode terminal 50 is inserted into the perforated hole 23 formed in the closed portion 20a of the battery housing 20 with the insulating gasket 54 interposed therebetween. The preform refers to an electrode terminal before being riveted.

Next, the caulking jig is inserted into the inner space of the battery housing 20. The caulking jig has a groove and a protrusion corresponding to the final shape of the electrode terminal 50 on the surface facing the preform in order to form the electrode terminal 50 by riveting the preform.

Next, the caulking jig is moved downward to press-form the upper portion of the preform so that the preform is transformed into a riveted electrode terminal 50.

While the preform is pressed by the caulking jig, the outer gasket 54a interposed between the outer flange portion 50b and the outer surface of the closed portion 20a of the battery housing 20 is elastically compressed and its thickness is reduced. In addition, a portion of the inner gasket 54b interposed between the inner edge 24 of the perforated hole 23 and the preform is elastically compressed by the inner flange portion 50c, and its thickness is further reduced than other areas. In particular, the area of the inner gasket 54b where the thickness is intensively reduced is a portion indicated by a dotted line circle in FIG. 20. Accordingly, the sealing performance and airtightness between the riveted electrode terminal 50 and the battery housing 20 are remarkably improved.

Preferably, it is preferred that the insulating gasket 54 is compressed sufficiently to secure a desired sealing strength without being physically damaged during the process of riveting the preform.

In one example, when the insulating gasket 54 is made of polybutylene terephthalate, the insulating gasket 54 preferably has a compression rate of 50% or more at a point where it is compressed to a minimum thickness. The compression rate is a ratio of the change in thickness before and after compression to the thickness before compression.

In another example, when the insulating gasket 54 is made of polyfluoroethylene, the insulating gasket 54 preferably has a compression rate of 60% or more at a point where it is compressed to a minimum thickness.

In still another example, when the insulating gasket 54 is made of polypropylene, the insulating gasket 54 preferably has a compression rate of 60% or more at a point where it is compressed to a minimum thickness.

Preferably, the press-forming of the upper portion of the preform may be performed stepwise by moving the caulking jig up and down at least twelve times. That is, the preform may be deformed several times by press-forming the preform stepwise. At this time, the pressure applied to the caulking jig may be increased stepwise. By distributing the stress applied to the preform several times, it is possible to prevent the insulating gasket 54 from being damaged during the caulking process. In particular, when a portion of the inner gasket 54b interposed between the inner edge 24 of the perforated hole 23 and the preform is intensively compressed by the inner flange portion 50c, damage to the gasket is minimized.

If the caulking jig is separated from the battery housing 20 after the press-forming of the preform using the caulking jig is completed, as shown in FIG. 20, a riveting structure of the electrode terminal 50 according to an embodiment of the present disclosure may be obtained.

According to the above embodiment, the caulking jig press-forms the upper portion of the preform through up and down movement inside the battery housing 20. In some cases, a rotary jig used in the prior art may be used for press-forming the preform.

However, the rotary jig rotates while tilted at a predetermined angle with respect to the central axis of the battery housing 20. Therefore, a rotary jig with a large rotation radius may interfere with the inner wall of the battery housing 20. In addition, when the depth of the battery housing 20 is large, the length of the rotary jig becomes that much longer. In this case, the press-forming of the preform may not be performed properly as the rotation radius of the end of the rotary jig increases. Therefore, press-forming using a caulking jig is more effective than that using a rotary jig.

FIG. 21 is a cross-sectional view showing a cylindrical battery 1 according to an embodiment of the present disclosure, taken along the longitudinal direction Y. Although the overall structure of the cylindrical battery 1 has been described above, the overall structure of the cylindrical battery 1 will be described from another point of view as described above.

Referring to FIG. 21, in the cylindrical battery 1 according to an embodiment includes a jelly-roll type electrode assembly 10 in which first and second sheet-shaped electrodes are wound with a separator interposed therebetween, wherein a uncoated portion 11 of the first electrode is exposed on the upper portion and an uncoated portion 12 of the second electrode is exposed on the lower portion.

In an embodiment, the first electrode may be a negative electrode and the second electrode may be a positive electrode, or vice versa.

The winding method of the electrode assembly 10 is substantially the same as the winding method of the electrode assembly used in manufacturing the tab-less cylindrical battery according to the prior art described with reference to FIGS. 1 and 2.

In depicting the electrode assembly 10, only the uncoated portions 11 and 12, which are exposed and extended to the outside of the separator, are shown in detail, and the winding structure of the first electrode, the second electrode and the separator is not shown.

The cylindrical battery 1 also includes a cylindrical battery housing 20 that accommodates the electrode assembly 10 and is electrically connected to the uncoated portion 12 of the second electrode.

Preferably, one side (lower portion) of the battery housing 20 is open. In addition, the closed portion 20a of the battery housing 20 has a structure in which the electrode terminal 50 is riveted to the perforated hole 23 through a caulking process.

Specifically, the electrode terminal 50 may include a body portion 50a inserted into the perforated hole 23, an outer flange portion 50b extending along the outer surface from a circumference of one side of the body portion 50a exposed through the outer surface of the closed portion 20a of the battery housing 20, an inner flange portion 50c extending toward the inner surface from a circumference of the other side of the body portion 50a exposed through the inner surface of the closed portion 20a of the battery housing 20, and a flat portion 50d provided on the inner side of the inner flange portion 50c.

The cylindrical battery 1 may also include an insulating gasket 54 interposed between the electrode terminal 50 and the perforated hole 23.

The cylindrical battery 1 may also include a sealing body for sealing an open end of the battery housing 20 to be insulated from the battery housing 20. Preferably, the sealing body may include a cap plate 30 having no polarity and a sealing gasket 80 interposed between an edge of the cap plate 30 and the open end of the battery housing 20.

The cap plate 30 may be made of a conductive metal material such as aluminum, steel, or nickel. In addition, the sealing gasket 80 may be made of polypropylene, polybutylene terephthalate, polyfluorinated ethylene, and the like having insulation and elasticity. However, the present disclosure is not limited by the materials of the cap plate 30 and the sealing gasket 80.

The cap plate 30 may include a vent portion 31 that is ruptured when the pressure inside the battery housing 20 exceeds a critical value. The vent portion 31 may be formed on both surfaces of the cap plate 30. The vent portion 31 may form a continuous or discontinuous circular pattern, a straight line pattern, or other pattern on the surface of the cap plate 30.

The battery housing 20 may include a crimping portion 22 that is extended and bent to the inside of the battery housing 20 to surround and fix the edge of the cap plate 30 together with the sealing gasket 80 in order to fix the sealing body.

The battery housing 20 may also include a beading portion 21 press-fitted into the battery housing 20 in an area adjacent to the open end. When the sealing body is fixed by the crimping portion 22, the beading portion 21 supports the edge of the sealing body, particularly the outer circumferential surface of the sealing gasket 80.

The cylindrical battery 1 may further include a second current collecting plate 70 welded to the uncoated portion 12 of the second electrode. The second current collecting plate 70 is made of a conductive metal material such as aluminum, steel, or nickel. Preferably, at least a part of an edge of the second current collecting plate 70 not in contact with the uncoated portion 12 of the second electrode may be interposed between the beading portion 21 and the sealing gasket 80 and fixed by the crimping portion 22. Optionally, at least a part of the edge of the second current collecting plate 70 may be fixed to the inner circumference of the beading portion 21 adj acent to the crimping portion 22 through welding.

The cylindrical battery 1 may also include a first current collecting plate 40 welded to the uncoated portion 11 of the first electrode. Preferably, at least a part of the first current collecting plate 40, for example a center portion, may be welded to the flat portion 50d of the electrode terminal 50.

Preferably, when the first current collecting plate 40 is welded, a welding tool may be inserted through the winding center hole C existing in the core of the electrode assembly 10 and reach the welding point of the first current collecting plate 40. In addition, since the electrode terminal 50 supports the welding area of the first current collecting plate 40 when the first current collecting plate 40 is welded to the flat portion 50d of the electrode terminal 50, welding quality may be improved by applying strong pressure to the welding area. In addition, since the flat portion 50d of the electrode terminal 50 has a large area, a wide welding area may also be secured. Accordingly, internal resistance of the cylindrical battery 1 may be lowered by lowering the contact resistance of the welding area. The face-to-face welding structure of the riveted electrode terminal 50 and the first current collecting plate 40 is very useful for rapid charging using high C-rate current. This is because the current density per unit area can be lowered in the cross section in a direction in which the current flows, so the amount of heat generated in the current path may be lowered than before.

When welding the flat portion 50d of the electrode terminal 50 and the first current collecting plate 40, any one of laser welding, ultrasonic welding, spot welding and resistance welding may be used. The area of the flat portion 50d may be adjusted differently depending on the welding method, and is preferably 2 mm or more for welding strength and ease of the welding process.

In one example, when the flat portion 50d and the first current collecting plate 40 are welded with a laser and welded in a continuous or discontinuous line in the form of an arc pattern, the diameter of the flat portion 50d is preferably 4 mm or more. When the diameter of the flat portion 50d satisfies the corresponding condition, welding strength may be secured, and there is no difficulty in performing the welding process by inserting a laser welding tool into the winding center hole C of the electrode assembly 10.

In another example, when the flat portion 50d and the first current collecting plate 40 are ultrasonically welded and welded in a circular pattern, the diameter of the flat portion 50d is preferably 2 mm or more. If the diameter of the flat portion 50d satisfies the corresponding condition, welding strength may be secured, and there is no difficulty in preforming the welding process by inserting an ultrasonic welding tool into the winding center hole C of the electrode assembly 10.

The cylindrical battery 1 may further include an insulator 60. The insulator 60 may be interposed between the first current collecting plate 40 and the inner surface of the closed portion 20a of the battery housing 20, and between the inner circumference of the sidewall of the battery housing 20 and the electrode assembly 10. Preferably, the insulator 60 may include an insulator hole 60a exposing the flat portion 50d of the electrode terminal 50 toward the first current collecting plate 40 and cover the surface of the first current collecting plate 40 and an edge of one side (upper portion) of the electrode assembly 10.

Preferably, the uncoated portions 11, 12 of the first electrode and/or the second electrode may be bent from the outer circumference of the electrode assembly 10 toward the core to form a bent surface on the upper and lower portions of the electrode assembly 10. In addition, the first current collecting plate 70 may be welded to a bent surface formed by bending the uncoated portion 12 of the second electrode, and the second current collecting plate 40 may be welded to a bent surface formed by bending the uncoated portion 11 of the first electrode.

In order to relieve stress generated when the uncoated portions 11, 12 are bent, the first electrode and/or the second electrode may have an improved structure different from that of the conventional electrode (see FIG. 1).

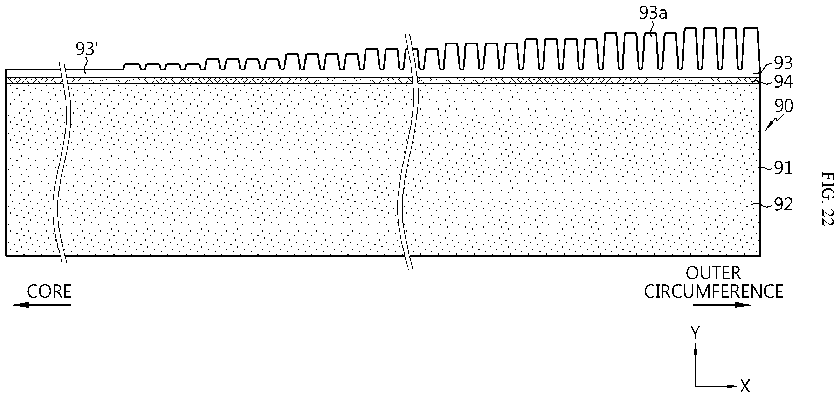

FIG. 22 is a plan view showing a structure of an electrode 90 according to an embodiment of the present disclosure.

Referring to FIG. 22, the electrode 90 includes a sheet-shaped current collector 91 made of a foil of a conductive material, an active material layer 92 formed on at least one surface of the current collector 91, and an uncoated portion 93 formed on a long side end of the current collector 91 and not coated with an active material.

Preferably, the uncoated portion 93 may include a plurality of notched segments 93a. The plurality of segments 93a form a plurality of groups, and segments 93a belonging to each group may have the same height (length in the Y direction) and/or the same width (length in the X direction) and/or the same separation pitch. The number of segments 93a belonging to each group may be increased or decreased than shown. The segment 93a may have a trapezoidal shape, but may be deformed into a quadrilateral, equilateral quadrilateral, semi-circular or semi-elliptical shape.

Preferably, the height of the segments 93a may increase stepwise from the core toward the outer circumference. In addition, the core-side uncoated portion 93' adj acent to the core may not include the segment 93a, and the height of the core-side uncoated portion 93' may be smaller than that of the other region of the uncoated portion.

Optionally, the electrode 90 may include an insulating coating layer 94 covering a boundary between the active material layer 92 and the uncoated portion 93. The insulating coating layer 94 includes an insulating polymer resin and may optionally further include an inorganic filler. The insulating coating layer 94 serves to prevent an end of the active material layer 92 from contacting the active material layer of opposite polarity through a separator and to structurally support the bending of the segment 93a. To this end, when the electrode 90 is wound into an electrode assembly, at least a part of the insulating coating layer 94 is preferably exposed to the outside from the separator.

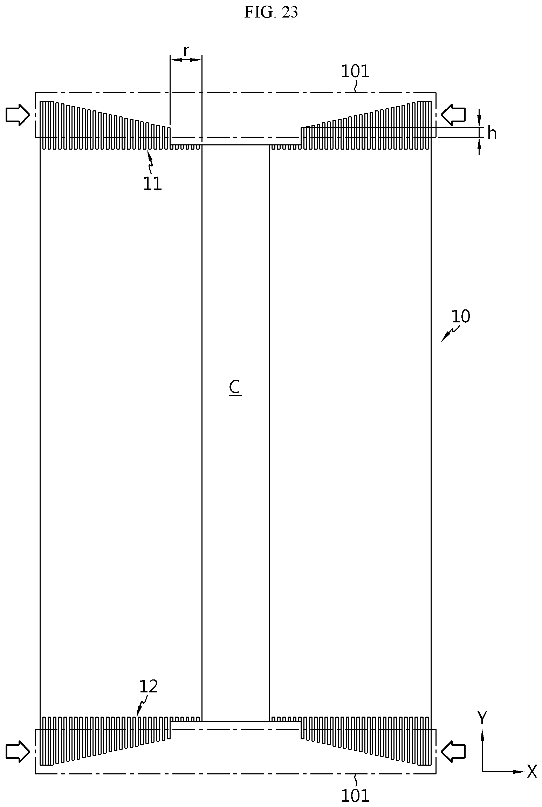

FIG. 23 is a cross-sectional view, taken along the longitudinal direction Y, showing an electrode assembly 100 in which a segment structure of the uncoated portion of the electrode 90 according to an embodiment of the present disclosure is applied to the first electrode and the second electrode.

Referring to FIG. 23, the electrode assembly 100 may be manufactured by the winding method described through FIGS. 1 and 2. For convenience of description, the protruding structures of the uncoated portions 11, 12 extending to the outside of the separator are shown in detail, and the winding structure of the first electrode, the second electrode and the separator is omitted. The uncoated portion 11 that protrudes upward extends from the first electrode, and the uncoated portion 12 that protrudes downward extends from the second electrode.

The pattern in which the heights of the uncoated portions 11, 12 change is schematically shown. That is, the heights of the uncoated portions 11, 12 may vary irregularly according to the position where the section is cut. For example, when a side portion of the trapezoidal segment 93a is cut, the height of the uncoated portion in the cross section becomes lower than that of the segment 93a. Accordingly, it should be understood that the heights of the uncoated portions 11, 12 shown in the cross-sectional view of the electrode assembly 100 correspond to the average of the height of the uncoated portion included in each winding turn.

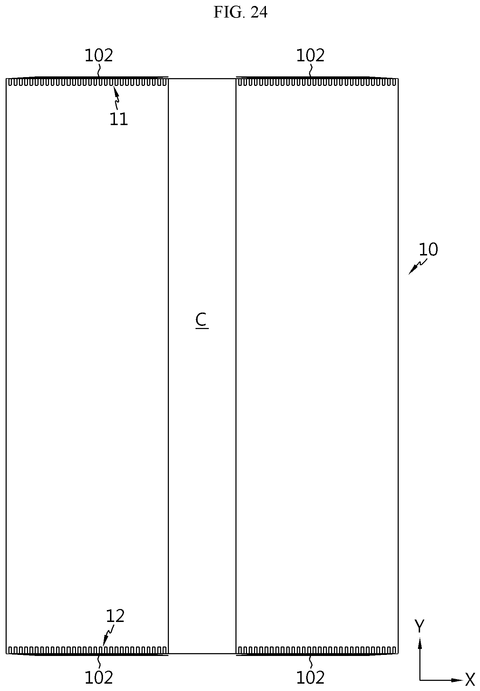

As shown in FIG. 24, the uncoated portions 11, 12 may be bent from the outer circumference of the electrode assembly 100 toward the core. In FIG. 23, the bent portion 101 is indicated by a dotted line box. When the uncoated portions 11, 12 are bent, the segments adjacent to each other in a radial direction overlap each other in several layers to form bent surfaces 102 on the upper and lower portions of the electrode assembly 100. At this time, the core-side uncoated portion 93' (FIG. 22) is not bent due to its low height, and the height (h) of the segment bent at the innermost side is less than or equal to the radial length (r) of the winding area formed by the core-side uncoated portion 93' with no segment structure. Therefore, the winding center hole C in the core of the electrode assembly 100 is not closed by the bent segments. If the winding center hole C is not closed, there is no difficulty in the electrolyte injection process, and the electrolyte injection efficiency is improved. In addition, the electrode terminal 50 and the first current collecting plate 40 may be easily welded by inserting a welding tool through the winding center hole C.

In the cylindrical battery 1 according to an embodiment of the present disclosure, the cap plate 30 does not have polarity. Instead, the second current collecting plate 70 is connected to the sidewall of the battery housing 20, so the outer surface of the closed portion 20a of the battery housing 20 has polarity opposite to that of the electrode terminal 50. Therefore, when connecting a plurality of cells in series and/or parallel, wiring such as bus bar connection may be performed on the upper portion of the cylindrical battery 1 using the outer surface of the closed portion 20a of the battery housing 20 and the electrode terminal 50. Through this, energy density may be improved by increasing the number of cells that can be mounted in the same space.

Hereinafter, an embodiment of a positive electrode active material used in the cylindrical battery according to the present disclosure will be described.

In an embodiment, the "primary particle" is a particle in which no grain boundary appears when observed in a field of view of 5000 to 20000 magnification using a scanning electron microscope (SEM) or an electron back scatter diffraction (EBSD). "Average particle diameter of primary particles" means an arithmetic average value calculated after measuring particle diameters of primary particles observed in a SEM or EBSD image.

"Secondary particle" is a particle formed by aggregating a plurality of primary particles. In the present disclosure, a secondary particle in which 10 or less primary particles are aggregated will be referred to as pseudo-single particles in order to distinguish it from a conventional secondary particle formed by aggregating tens to hundreds of primary particles.

In the present disclosure, "specific surface area" is measured by the BET method, and may be specifically calculated from the nitrogen gas adsorption amount under liquid nitrogen temperature (77K) using BELSORP-mino II of BEL Japan.

In the present disclosure, "$D_{min}$", "$D_{50}$" and "$D_{max}$" are particle size values of the cumulative volume distribution of the positive electrode active material measured using a laser diffraction method. Specifically, $D_{min}$ is a minimum particle size appearing in the cumulative volume distribution, $D_{50}$ is a particle size when the volume cumulative amount is 50%, and $D_{max}$ is a maximum particle size appearing in the cumulative volume distribution. If the positive electrode active material is a single particle, $D_{50}$ means an average particle diameter of the primary particles. In addition, when the positive electrode active material is a pseudo-single particle, $D_{50}$ means an average particle diameter of particles formed by aggregating primary particles.

The particle size value of the cumulative volume distribution may be measured by, for example, dispersing the positive electrode active material in a dispersion medium, then introducing the same into a commercially available laser diffraction particle size measuring device (e.g., Microtrac MT 3000), irradiating ultrasonic waves of about 28 kHz with output of 60W thereto, and obtaining a volume cumulative particle size distribution graph.

In the present disclosure, "consist essentially of A" indicates that the A component and any unmentioned components that do not substantially affect the basic and novel characteristics of the present disclosure are included. The basic and novel characteristics of the present disclosure include at least one of minimizing particle breakage during battery manufacturing, minimizing gas generated by such particle breakage, and minimizing the occurrence of internal cracks. A person skilled in the art may recognize the material influence of these characteristics.

As a result of repeated research to develop a positive electrode for an electrochemical device with high safety while realizing high capacity and an electrochemical device including the same, inventors of the present discloser have confirmed that the safety of a large cylindrical battery can be dramatically improved when the positive electrode active material in the form of a single particle composed of one primary particle or a pseudo-single particle, which is an aggregate of 10 or less primary particles, is used alone as a positive electrode active material.

According to one aspect, the positive electrode includes a positive electrode current collector; and a positive electrode active material layer formed on at least one side surface of the positive electrode current collector, wherein the positive electrode active material layer may include a positive electrode active material, and optionally, a conductive material and/or a binder.

The positive electrode may have a structure in which a positive electrode active material layer is formed on at least one surface or both surfaces of a long sheet-shaped positive electrode current collector, and the positive electrode active material layer may include a positive electrode active material and a binder.

Specifically, the positive electrode may be manufactured by applying a positive electrode slurry, which is prepared by dispersing a positive electrode active material, a conductive material and a binder in a solvent such as dimethyl sulfoxide (DMSO), isopropyl alcohol, N-methyl pyrrolidone (NMP), acetone, water or the like, on one surface or both surfaces of a long sheet-shaped positive electrode current collector, removing the solvent of the positive electrode slurry through a drying process, and then roll-pressing the same. Meanwhile, when the positive electrode slurry is applied, a positive electrode including an uncoated portion (non-coated portion) may be manufactured by not applying the positive electrode slurry to a partial area of the positive electrode current collector, for example, one end of the positive electrode current collector.

In another aspect, the positive electrode active material includes single particle-based active material particles. In one embodiment, the single particle-based active material particles may be 90wt% or more, 95wt% or more, 98wt% or more, or 99wt% or more, based on 100wt% of the positive electrode active material. In one specific embodiment, the positive electrode active material may be composed of only the single particle-based active material particles.

In this specification, the single particle-based active material particle refers to a single particle, a pseudo-single particle, or both of them. The single particle is a particle composed of one primary particle, and the pseudo-single particle is an aggregate of 10 or less primary particles.

Conventionally, it has been common to use a spherical secondary particle in which tens to hundreds of primary particles are aggregated as a positive electrode active material of a lithium battery. However, in the case of a positive electrode active material in the form of secondary particles in which many primary particles are aggregated, particle breakage in which primary particles fall off is easy to occur in the rolling process when manufacturing a positive electrode, and cracks occur inside the particles during the charging and discharging process. When particles of the positive electrode active material are broken or cracks occur inside the particles, the contact area with the electrolyte increases, so there is a problem in that gas generation due to a side reaction with the electrolyte increases. If the gas generation inside the cylindrical battery increases, the pressure inside the battery increases and there is a risk of battery explosion. In particular, when the volume of the cylindrical battery is increased, the amount of active material inside the battery increases as the volume increases, and as a result, the amount of gas generated increases significantly, so the risk of ignition and/or explosion of the battery increases further.

In contrast, the single particle-based active material particles in the form of a single particle composed of one primary particle or a pseudo-single particle in which 10 or less primary particles are aggregated have a higher particle strength than the positive electrode active material in the existing secondary particle form in which tens to hundreds of primary particles are aggregated, so particle breakage rarely occurs during the rolling process. In addition, since the number of primary particles constituting the single-particle-based active material particle is small, the volume expansion and contraction of the primary particles during charging and discharging is small, and thus the occurrence of cracks inside the particle is significantly reduced.

Therefore, when using the single particle-based active material particles as in the present disclosure, the amount of gas generated due to particle breakage and internal cracks may be significantly reduced. Accordingly, when the single particle-based active material particles are applied to a large cylindrical battery, excellent safety may be realized.

Meanwhile, the single particle and/or pseudo-single particle is included in an amount of 95wt% to 100wt%, preferably 98wt% to 100wt%, more preferably 99wt% to 100wt%, further preferably 100wt%, based on the entire weight of the positive electrode active material included in the positive electrode.

When the content of single particle and/or pseudo-single particle satisfies the above range, sufficient safety may be obtained when applied to a large-sized battery. When the positive electrode active material in the form of a secondary particle is included in an amount exceeding 5 wt% in the entire positive electrode active material, the side reaction with the electrolyte increases due to fine powder generated from the secondary particle during electrode manufacturing and charging/discharging, which may deteriorate suppression of gas generation and lower the stability improvement effect when applied to a large-sized battery.

Meanwhile, positive electrode active materials including single particles and/or pseudo-single particles according to the present disclosure may have $D_{min}$ of 1.0 $\mu$m or more, 1.1 $\mu$m or more, 1.15 $\mu$m or more, 1.2 $\mu$m or more, or 1.25 $\mu$m or more, 1.3 $\mu$m or more, or 1.5 $\mu$m or more. When the $D_{min}$ of the positive electrode active material is less than 1.0 $\mu$m, the linear pressure increases during the positive electrode rolling process, which may easily cause particle breakage and deteriorate thermal stability, making it impossible to secure sufficient thermal stability when applied to a large-sized cylindrical battery.

Meanwhile, considering resistance and power characteristics, $D_{min}$ of the positive electrode active material may be 3 $\mu$m or less, 2.5 $\mu$m or less, or 2 $\mu$m or less. If $D_{min}$ is too large, the lithium ion diffusion distance within the particles may increase, and thus the resistance and power characteristics may deteriorate.

For example, $D_{min}$ of the positive electrode active material may be 1.0 $\mu$m to 3 $\mu$m, 1.0 $\mu$m to 2.5 $\mu$m, or 1.3 $\mu$m to 2.0 $\mu$m.

Meanwhile, the positive electrode active material may have a $D_{50}$ of 5 $\mu$m or less, 4 $\mu$m or less, or 3 $\mu$m or less, and may be, for example, 0.5 $\mu$m to 5 $\mu$m, preferably 1 $\mu$m to 5 $\mu$m, more preferably 2 $\mu$m to 5 $\mu$m.

The positive electrode active material in the form of single particles and/or pseudo-single particles has less lithium mobility than the positive electrode active material in the form of secondary particles because there are fewer interfaces between primary particles that serve as a diffusion path for lithium ions inside the particles, and accordingly there is a problem that the resistance increases. The increase in resistance intensifies as the size of the particles increases, and when the resistance increases, capacity and power characteristics are adversely affected. Therefore, by adjusting $D_{50}$ of the positive electrode active material to 5 $\mu$m or less, it is possible to suppress an increase in resistance by minimizing the lithium ion diffusion distance inside the positive electrode active material particle.

In addition, the positive electrode active material may have $D_{max}$ of 12 $\mu$m to 17 $\mu$m, preferably 12 $\mu$m to 16 $\mu$m, and more preferably 12 $\mu$m to 15 $\mu$m. When $D_{max}$ of the positive electrode active material satisfies the above range, resistance characteristics and capacity characteristics are more excellent. If $D_{max}$ of the positive electrode active material is too large, aggregation has occurred between single particles, and the lithium movement path inside the agglomerated particles is lengthened, resulting in poor lithium mobility, which may increase resistance. Meanwhile, if $D_{max}$ of the positive electrode active material is too small by excessive crushing process, $D_{min}$ may decrease to less than 1 $\mu$m, which causes particle breakage during rolling and deteriorates thermal stability.

Meanwhile, the positive electrode active material may have a particle size distribution (PSD) represented by Formula 1 below of 3 or less, preferably 2 to 3, more preferably 2.3 to 3.

$$\text{Formula 1: particle size distribution (PSD)} = (D_{max} - D_{min})/D_{50}$$

When the positive electrode active material has the above particle size distribution, the electrode density of the positive electrode may be properly maintained, and particle breakage and resistance increase may be effectively suppressed.

Meanwhile, the positive electrode active material may have an average particle diameter of the primary particles of 5 $\mu$m or less, 4 $\mu$m or less, 3 $\mu$m or less, or 2 $\mu$m or less, and may be, for example, 0.5 $\mu$m to 5 $\mu$m, preferably 1 $\mu$m to 5 $\mu$m, more preferably 2 $\mu$m to 5 $\mu$m. When the average particle diameter of the primary particles satisfies the above range, the positive electrode active material in the form of a single particle and/or pseudo-single particle having excellent electrochemical properties may be formed. If the average particle diameter of the primary particles is too small, the number of aggregations of the primary particles forming the positive electrode active material increases, reducing the effect of suppressing particle breakage during rolling. If the average particle diameter of the primary particles is too large, the lithium diffusion path may be elongated, increasing resistance and deteriorating power characteristics.

In the present disclosure, the positive electrode active material preferably has a unimodal particle size distribution. Conventionally, in order to improve the electrode density of the positive electrode active material layer, bimodal positive electrode active materials in which a large particle diameter positive electrode active material with a large average particle diameter and a small particle diameter positive electrode active material with a small average particle diameter are mixed has been used frequently. However, in the positive electrode active material in the form of single particles or pseudo-single particles, when the particle size increases, the lithium movement path lengthens and the resistance increases remarkably. Thus, when large-diameter particles are mixed and used, a problem of deterioration in capacity and power characteristics may occur. Therefore, in the present disclosure, the increase in resistance may be minimized by using a positive electrode active material having a unimodal distribution.

Meanwhile, the positive electrode active material may include lithium nickel-based oxide, and specifically, may include lithium nickel-based oxide containing 80 mol% or more of Ni based on the total number of moles of transition metal. Preferably, the lithium nickel-based oxide may include 80 mol% or more and less than 100 mol% of Ni, 82 mol% or more and less than 100 mol% of Ni, or 83 mol% or more and less than 100 mol% of Ni. When the lithium nickel-based oxide having a high Ni content is used as above, high capacity may be realized.

More specifically, the positive electrode active material may include a lithium nickel-based oxide represented by the following [Chemical Formula 1].

[Chemical Formula 1] $\quad Li_aNi_bCo_cM^1_dM^2_eO_2$

In Chemical Formula 1, $M^1$ may be Mn, Al or a combination thereof, and may be preferably Mn or Mn and Al.

$M^2$ is at least one selected from the group consisting of Zr, W, Y, Ba, Ca, Ti, Mg, Ta and Nb, preferably at least one selected from the group consisting of Zr, Y, Mg, and Ti, more preferably Zr, Y or a combination thereof. The $M^2$ element is not necessarily included, but when included in an appropriate amount, it may play a role of promoting grain growth or improving crystal structure stability during sintering.

The a represents the molar ratio of lithium in the lithium nickel-based oxide, and may be $0.8 \leq a \leq 1.2$, $0.85 \leq a \leq 1.15$, or $0.9 \leq a \leq 1.2$. When the molar ratio of lithium satisfies the above range, a crystal structure of lithium nickel-based oxide may be stably formed.

The b represents the molar ratio of nickel among all metals except lithium in the lithium nickel-based oxide, and may be $0.8 \leq b < 1$, $0.82 \leq b < 1$, $0.83 \leq b < 1$, $0.85 \leq b < 1$, $0.88 \leq b < 1$ or $0.90 \leq b < 1$. When the molar ratio of nickel satisfies the above range, it is possible to realize high capacity by exhibiting high energy density.

The c represents the molar ratio of cobalt among all metals except lithium in the lithium nickel-based oxide, and may be $0 < c < 0.2$, $0 < c < 0.18$, $0.01 \leq c \leq 0.17$, $0.01 \leq c \leq 0.15$, $0.01 \leq c \leq 0.12$ or $0.01 \leq c \leq 0.10$. When the molar ratio of cobalt satisfies the above range, good resistance characteristics and power characteristics may be implemented.

The d represents the molar ratio of $M^1$ element among all metals except lithium in the lithium nickel-based oxide, and may be $0 < d < 0.2$, $0 < d < 0.18$, $0.01 \leq d \leq 0.17$, $0.01 \leq d \leq 0.15$, $0.01 \leq d \leq 0.12$, or $0.01 \leq d \leq 0.10$. When the molar ratio of $M^1$ element satisfies the above range, the structural stability of the positive electrode active material is excellent.

The e represents the molar ratio of $M^2$ element among all metals except for lithium in the lithium nickel-based oxide, and may be $0 \leq e \leq 0.1$ or $0 \leq e \leq 0.05$.

Meanwhile, the positive electrode active material according to the present disclosure may further include, if necessary, a coating layer including at least one coating element selected from the group consisting of Al, Ti, W, B, F, P, Mg, Ni, Co, Fe, Cr, V, Cu, Ca, Zn, Zr, Nb. Mo, Sr, Sb, Bi, Si and S on the surface of the lithium nickel-based oxide particle. Preferably, the coating element may be Al, B, Co, or a combination thereof.

When the coating layer is present on the surface of lithium nickel-based oxide particles, contact between the electrolyte and the lithium nickel-based oxide is suppressed by the coating layer, thereby reducing transition metal elution or gas generation due to side reactions with the electrolyte.

The positive electrode active material may be included in an amount of 80 wt% to 99 wt%, preferably 85 wt% to 99 wt%, more preferably 90 wt% to 99 wt%, based on the total weight of the positive electrode active material layer.

Meanwhile, as the positive electrode current collector, various positive electrode current collectors used in the art may be used. For example, stainless steel, aluminum, nickel, titanium, calcined carbon or aluminum, or stainless steel surface-treated with carbon, nickel, titanium, silver, or the like may be used as the positive electrode current collector. The positive electrode current collector may typically have a thickness of 3 $\mu$m to 500 $\mu$m, and fine irregularities may be formed on the surface of the positive electrode current collector to increase adhesion of the positive electrode active material. The positive electrode current collector may be used in various forms of, for example, film, sheet, foil, net, porous material, foam, or nonwoven fabric.

Meanwhile, in one embodiment of the present disclosure, all or some of the single particle-based active material particles may have a core-shell structure in which the particle surface is coated with a conductive coating layer. The conductive coating layer may cover at least some or all of the particles. The conductive coating layer includes conductive nanomaterials.

The single particle-based active material particle has a problem in that the electrical conductivity is lowered because the resistance is higher than that of the conventional secondary particle type positive electrode active material and the contact area with the conductive material is small. When an excessive amount of conductive material is added to improve electrical conductivity, aggregation occurs in the positive electrode slurry, resulting in increased viscosity, which causes poor coating properties. Therefore, in order to implement smooth coating properties, the viscosity of the positive electrode slurry must be lowered by reducing the solid content. However, if the solid content in the positive electrode slurry decreases, the active material content decreases, which may deteriorate the capacity characteristics. In the present disclosure, in order to solve this problem, the surface of the single particle-based active material is coated with a conductive nanomaterial, so that excellent electrical conductivity may be realized without adding a separate conductive material to the positive electrode slurry.

In one embodiment of the present disclosure, when the single particle-based active material coated with a conductive nanomaterial is applied as the positive electrode active material, the positive electrode active material layer may not include a conductive material on a portion other than the conductive coating layer. Since there is no need to additionally use a conductive material that causes aggregation of the positive electrode slurry as described above, the viscosity of the positive electrode slurry may be reduced, the solid content may be decreased, and the electrode coating process efficiency and electrode adhesion may be improved.

In the present disclosure, the conductive nanomaterial may be a conductive material having a nano size so as to be smoothly coated on particles, and the type is not particularly limited. For example, the conductive nanomaterial may be a carbon nanotube, carbon nanoparticle, or the like.

The conductive nanomaterial may have various shapes, and may be, for example, spherical, flaky, or fibrous.

Meanwhile, the conductive coating layer may be formed by mixing single particle-based active material particles, which are a core part, and a conductive nanomaterial, and then thermally treating the mixture. At this time, the mixing may be performed as solid mixing or liquid mixing.

In one embodiment of the present disclosure, the positive electrode active material layer contains flake graphite. When using the single particle-based active material as the positive electrode active material, if the positive electrode active material layer contains flake graphite, in the case of rolling the positive electrode active material layer, the sliding effect of the flake graphite on the positive electrode active material is provided to improve the rolling characteristics of the electrode, and the porosity of the electrode may be lowered to a desired level. Accordingly, stability, initial resistance characteristics, and charge/discharge efficiency of a battery to which the positive electrode according to the present disclosure is applied may be improved.

In one embodiment of the present disclosure, the flake graphite may be included in an amount of 0.1 wt% to 5 wt%, preferably 0.1 wt% to 3 wt%, based on 100 wt% of the positive electrode active material layer.

When the content of flake graphite satisfies the above range, the positive electrode rolling characteristics are improved and excellent electrode density may be realized. If the content of flake graphite is too small, the effect of improving the rolling properties is insignificant, and if it is too large, it may cause an increase in slurry viscosity and decrease in phase stability, and resistance may increase due to a decrease in electrode uniformity through coupling with a conductive material.

Meanwhile, the flake graphite used in the present disclosure may have an average particle diameter of 1 $\mu$m to 20 $\mu$m, preferably 2 $\mu$m to 10 $\mu$m, more preferably 3 $\mu$m to 5 $\mu$m, but is not limited thereto. If the size of the flake graphite is too small, it is difficult to realize the desired porosity, and the current density may be lowered, resulting in lower capacity. At this time, the average particle diameter of the flake graphite may be measured using a laser diffraction method (ISO 13320).

In addition, the flake graphite may have an aspect ratio of 0.1 to 500, preferably 1 to 100, more preferably 1 to 30. When the aspect ratio of flake graphite satisfies the above range, the effect of lowering electrode resistance by improving conductivity occurs.

In addition, the flake graphite may have a density of 2.0 g/cm$^3$ to 2.5 g/cm$^3$, preferably 2.1 g/cm$^3$ to 2.4 g/cm$^3$, more preferably 2.2 g/cm$^3$ to 2.3 g/cm$^3$.

Meanwhile, in the present disclosure, the porosity of the positive electrode active material layer may be 15% to 23%, preferably 17% to 23%, more preferably 18% to 23%. When the porosity of the positive electrode active material layer satisfies the above range, the electrode density increases to realize excellent capacity and the resistance decreases. If the porosity is too low, the electrolyte impregnability is low, and lithium precipitation may occur due to non-impregnation of the electrolyte. If the porosity is too high, the contact between the electrodes is not good, which increases the resistance and decreases the energy density, so the capacity improvement effect is insignificant.

The porosity value of the positive electrode active material layer may be achieved i) by the positive electrode active material containing single particle-based active material particles and ii) by adding flake graphite to the positive electrode active material.

In implementing a high loading electrode with a relatively high loading amount of the positive electrode active material, when using a positive electrode active material in the form of a single particle or pseudo-single particle as in the present disclosure, particle breakage of the active material during rolling is significantly reduced compared to the conventional positive electrode active material in the form of a secondary particle, and damage to the positive electrode current collector (Al foil) is reduced, so rolling is possible with a relatively high linear pressure. Therefore, the porosity of the positive electrode active material layer may be decreased to the numerical range as described above, so the energy density may be increased.

In addition, if the positive electrode active material layer contains flake graphite as in the present disclosure, the flake graphite may provide a sliding effect during rolling and fill the pores of the positive electrode active material layer, so the porosity of the positive electrode active material layer may be reduced to the above numerical range.

In addition, the positive electrode may have a loading amount of 570 mg/25cm$^2$ or more, preferably 600 mg/25cm$^2$ to 800 mg/25cm$^2$, more preferably 600 mg/25cm$^2$ to 750 mg/25cm$^2$. Specifically, in the lithium secondary battery according to the present disclosure, the loading amount of the positive electrode may be secured in a relatively high level because the rolling characteristics of the electrode are improved by applying a single particle and/or pseudo-single particle positive electrode active material and flake graphite, and through this, high-capacity characteristics may be implemented.

In one embodiment of the present disclosure, the positive electrode active material layer may further include a conductive material. The conductive material is used to impart conductivity to the electrode, and any material that does not cause chemical change inside the battery and has electronic conductivity may be used without particular limitations. Specific examples may include graphite such as natural graphite or artificial graphite; carbon-based materials such as carbon black, acetylene black, Ketjen black, channel black, furnace black, lamp black, thermal black, carbon fiber, or carbon nanotube; metal powder or metal fiber such as copper, nickel, aluminum, or silver; conductive whiskers such as zinc oxide or potassium titanate; conductive metal oxides such as titanium oxide; and conductive polymers of polyphenylene derivatives and the like, which may be used alone or as a mixture. The conductive material may be typically included in an amount of 1 wt% to 30 wt%, preferably 1 wt% to 20 wt%, more preferably 1 wt% to 10 wt%, based on the total weight of the positive electrode active material layer.

In one specific embodiment of the present disclosure, the conductive material may include carbon nanotube.

In one embodiment of the present disclosure, the positive electrode active material may include a multi-wall carbon nanotube having a large specific surface area and a small wall number as a conductive material. The multi-wall carbon nanotube may be included in an amount of 50 wt% or more, 70 wt% or more, 90 wt% or more, or 99 wt% or more, based on 100 wt% of the conductive material. In a specific embodiment of the present disclosure, the conductive material may include only the multi-walled carbon nanotube.

In the present disclosure, the multi-wall carbon nanotube has a BET specific surface area of 300 m$^2$/g to 500 m$^2$/g. The multi-wall carbon nanotube is referred to as 'new CNT' in order to be distinguished from the conventional one.

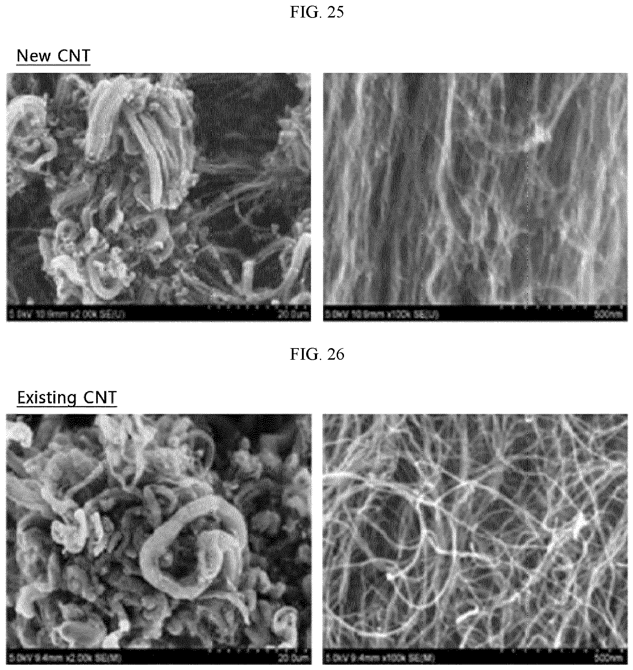

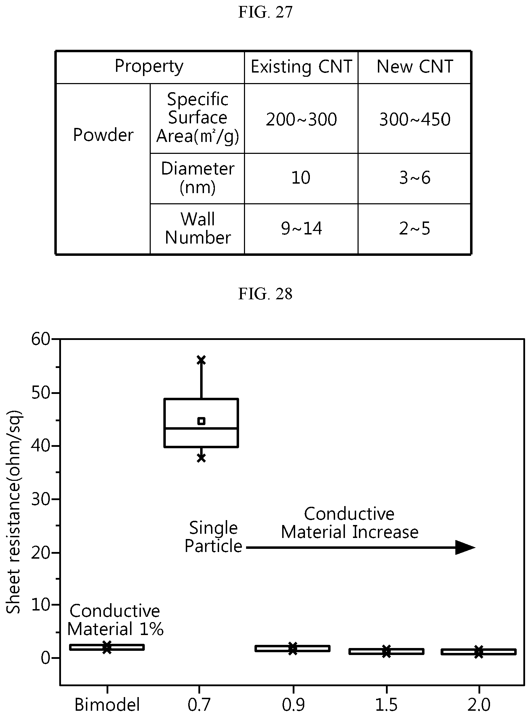

The carbon nanotube (conventional CNT) commonly used in the art had a BET specific surface area of less than 300 m$^2$/g. The SEM images and physical properties (FIG. 27) of the new CNT (FIG. 25) used in the present disclosure and the existing CNT (FIG. 26) may be compared as follows.

As can be seen from the SEM images, the new CNT applied to the present disclosure is a bundled type and has a multi-wall structure, but has a higher BET and a smaller wall number and diameter than the conventional CNT.

In the case of using the positive electrode active material in the form of a secondary particle, sufficient electrical conductivity could be achieved even if the existing CNT was used at a level of 0.4wt% to 0.6wt%. However, the single particle or pseudo-single particle positive electrode active material has higher resistance, compared to the conventional secondary particle type positive electrode active material, and the contact area with the conductive material is small, so the electrical conductivity is low. Thus, in order to realize sufficient electrical conductivity using the existing CNT with a BET specific surface area of less than 300 m$^2$/g, the content of the conductive material must be 0.9 wt% or more.

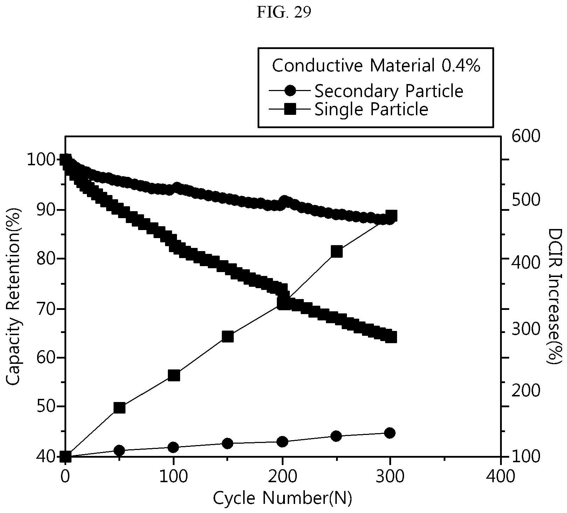

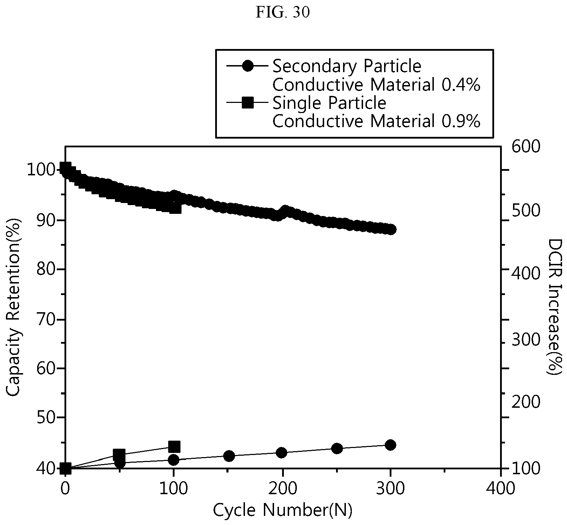

FIGS. 28 to 31 are graphs showing sheet resistance and high-temperature life characteristics for each conductive material ratio when single particles or pseudo-single particles are applied as the positive electrode active material.

Through the graphs, it may be understood that when a single particle or pseudo-single particle is applied as the positive electrode active material, the usage amount of conductive material should increase compared to the case of applying an existing positive electrode active material in the form of a secondary particle.

However, when the content of carbon nanotube is increased to 0.9 wt% or more, aggregation occurs in the positive electrode slurry, resulting in an increase in viscosity, and thus coating properties deteriorate. Therefore, in order to implement smooth coating properties, the viscosity of the positive electrode slurry must be lowered by reducing the solid content in the positive electrode slurry. However, when the solid content in the positive electrode slurry decreases, the content of active material decreases and the capacity characteristics deteriorate.

As a result of repeated research to solve this problem, the inventors of the present disclosure have found that when a carbon nanotube with a BET specific surface area of 300 m$^2$/g to 500 m$^2$/g is applied as a conductive material together with a positive electrode active material, which is a single particle-based active material particle, sufficient electrical conductivity can be secured with only a relatively small amount of carbon nanotube, and accordingly, the slurry viscosity can be maintained low even when the solid content of the positive electrode slurry is formed as high as 70 wt% to 80 wt%.

Specifically, the carbon nanotube used in the present disclosure may be a multi-wall carbon nanotube having a BET specific surface area of 300 $m^2$/g to 500 $m^2$/g, preferably 300 $m^2$/g to 450 $m^2$/g. When the BET specific surface area satisfies the above range, sufficient electrical conductivity may be secured even with a small amount of carbon nanotube.

In addition, the carbon nanotube may be a multi-wall carbon nanotube having a wall number of 2 to 8, preferably 2 to 6, more preferably 3 to 6.

In addition, the carbon nanotube may have a diameter of 1 nm to 8 nm, preferably 3 nm to 8 nm, more preferably 3 nm to 6 nm.

The carbon nanotube may be included in an amount of 0.7 wt% or less, preferably 0.3 wt% to 0.7 wt%, more preferably 0.4 wt% to 0.6 wt%, based on the total weight of the positive electrode active material layer. When the content of the carbon nanotube satisfies the above range, sufficient electrical conductivity may be achieved, and the solid content in the positive electrode slurry may be maintained high, so that the content of the positive electrode active material may be high in the positive electrode active material layer and, as a result, excellent capacity characteristics may be implemented.

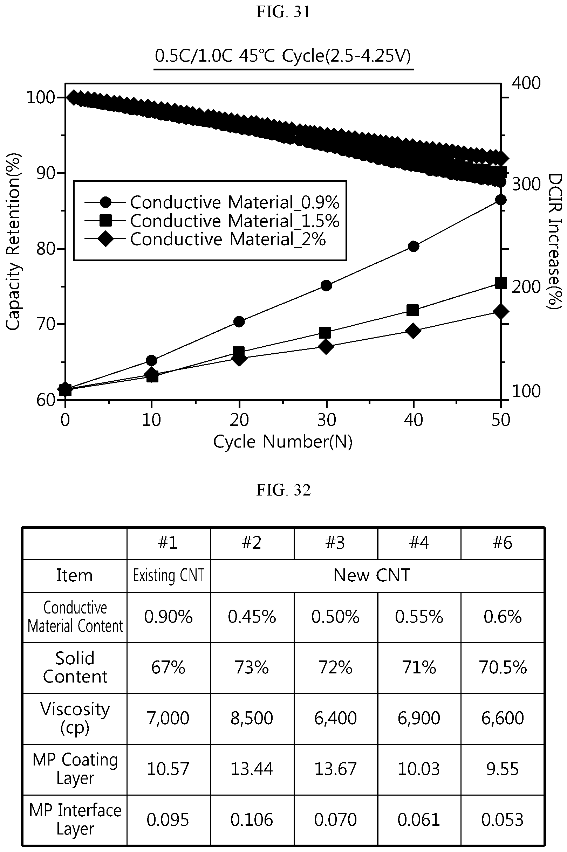

The table shown in FIG. 32 comparatively shows the solid content and viscosity of the positive electrode slurry and the resistance values at the MP coating layer and MP interface layer in the case where a carbon nanotube (new CNT) having a BET specific surface area of 300 $m^2$/g to 500 $m^2$/g is applied and the case where a carbon nanotube (existing CNT) having a BET of 200 $m^2$/g or more and less than 300 $m^2$/g is applied. Through the table, it may be found that when the new CNT is applied, the positive electrode slurry has a lower viscosity and excellent electrical conductivity even when the solid content of the positive electrode slurry is higher than that of the conventional CNT.

The binder serves to improve the attachment among the particles of the positive electrode active material and the adhesion between the positive electrode active material and the positive electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, which may be used alone or as a mixture. The binder may be included in an amount of 1 wt% to 30 wt%, preferably 1 wt% to 20 wt%, more preferably 1 wt% to 10 wt%, based on the total weight of the positive electrode active material layer.

Another aspect of the present disclosure relates to an electrode assembly including the positive electrode, and a battery including the electrode assembly. The electrode assembly includes a negative electrode and a positive electrode, and the positive electrode has the above-described characteristics.

In the electrode assembly, for example, a separator may be stacked to be interposed between the negative electrode and the positive electrode to form a stacked or stacked/folded structure, or may be wound to form a jelly-roll structure. In addition, when the jelly-roll structure is formed, a separator may be additionally placed on the outer side in order to prevent the negative electrode and the positive electrode from contacting each other.

The negative electrode includes a negative electrode current collector; and a negative electrode active material layer formed on at least one side surface of the negative electrode current collector. The negative electrode may have a structure in which a negative electrode active material layer is formed on one surface or both surfaces of a long sheet-shaped negative electrode current collector, and the negative electrode active material layer may include a negative electrode active material, a conductive material, and a binder.

Specifically, the negative electrode may be manufactured by coating a negative electrode slurry, which is prepared by dispersing a negative electrode active material, a conductive material and a binder in a solvent such as dimethyl sulfoxide (DMSO), isopropyl alcohol, N-methylpyrrolidone (NMP), acetone, or water, on one surface or both surfaces of a long sheet-shaped negative electrode current collector, removing the solvent of the negative electrode slurry through a drying process, and then roll-pressing. When the negative electrode slurry is coated, a negative electrode having an uncoated portion may be manufactured by not applying the negative electrode slurry to a partial area of the negative electrode current collector, for example, one end of the negative electrode current collector.

As the negative electrode active material, a compound capable of reversible intercalation and de-intercalation of lithium may be used. Specific examples of the negative electrode active material include carbonaceous materials such as artificial graphite, natural graphite, graphitized carbon fiber, or amorphous carbon; silicon-based materials such as Si, Si-Me alloy (where Me is at least one selected from the group consisting of Al, Sn, Mg, Cu, Fe, Pb, Zn, Mn, Cr, Ti, and Ni), $SiO_y$ (where 0<y<2), or Si-C composites; lithium metal thin film; metal materials capable of being alloyed with lithium, such as Sn or Al; and the like, which may be used alone or as a mixture.

In the present disclosure, the negative electrode may include a silicon-based negative electrode active material. The silicon-based negative electrode active material may be a Si, Si-Me alloy (where Me is one selected from the group consisting of Al, Sn, Mg, Cu, Fe, Pb, Zn, Mn, Cr, Ti, and Ni), $SiO_y$ (here, $0<y<2$), Si-C composites, or a combination thereof, and may be preferably $SiO_y$ (here, $0<y<2$). Since the silicon-based negative electrode active material has a high theoretical capacity, capacity characteristics may be improved when the silicon-based negative electrode active material is included.

The silicon-based negative electrode active material may be doped with $M^b$ metal, and in this case, the $M^b$ metal may be a Group 1 metal element or a Group 2 metal element, and specifically, may be Li, Mg, or the like. Specifically, the silicon-based negative electrode active material may be Si, $SiO_y$ (here, $0<y<2$), Si-C composites, or the like, doped with $M^b$ metal. In the case of the metal-doped silicon-based negative electrode active material, the active material capacity is somewhat lowered due to the doping element, but high energy density may be realized due to its high efficiency.

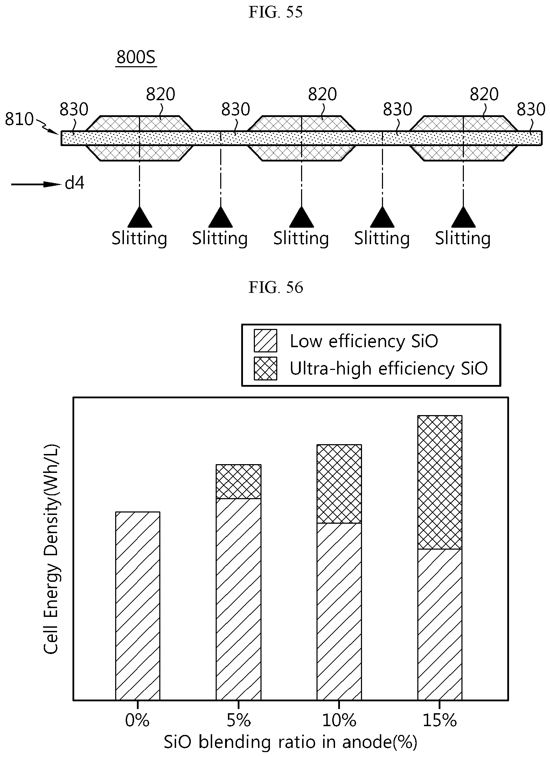

FIG. 56 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

In FIG. 56, low efficiency SiO refers to un-doped SiO, and ultra-high efficiency SiO refers to Mg/Li-doped SiO. Through FIG. 56, it may be found that the energy density improves as the content of the silicon-based negative electrode active material among the total negative electrode active materials increases. In addition, it may be found that as the ratio of the doped silicon-based negative electrode active material among the silicon-based negative electrode active materials increases, the effect of improving the energy density becomes better.

The silicon-based negative electrode active material may further include a carbon coating layer on the particle surface. At this time, the carbon coating amount may be 20 wt% or less, preferably 1 wt% to 20 wt%, based on the total weight of the silicon-based negative electrode active material. The carbon coating layer may be formed through a method such as dry coating, wet coating, chemical vapor deposition (CVD), physical vapor deposition (PVD), or atomic layer deposition (ALD).

In one embodiment of the present disclosure, the silicon-based negative electrode active material may have a capacity of 1000 mAh/g to 4000 mAh/g, and an initial efficiency of about 60% to 95%.

In another embodiment of the present disclosure, $D_{50}$ of the silicon-based negative electrode active material may be 3 um to 8 um, and $D_{min}$ to $D_{max}$ may be included in the range of 0.5 um to 30 um.

The negative electrode, if necessary, may further include a carbon-based negative electrode active material as a negative electrode active material. The carbon-based negative electrode active material may be, for example, artificial graphite, natural graphite, graphitized carbon fiber, amorphous carbon, soft carbon, hard carbon, or the like, but is not limited thereto.

When using a mixture of the silicon-based negative electrode active material and the carbon-based negative electrode active material as the negative electrode active material, the mixing ratio of the silicon-based negative electrode active material and the carbon-based negative electrode active material may be 1:99 to 20:80, preferably 1:99 to 15:85, more preferably 1:99 to 10:90, in weight ratio.

The negative electrode active material may be included in an amount of 80 wt% to 99 wt%, preferably 85 wt% to 99 wt%, more preferably 90 wt% to 99 wt%, based on the total weight of the negative electrode active material layer.

If necessary, the negative electrode active material may further include at least one selected from lithium metal and metal materials capable of alloying with lithium, such as Sn or Al.

As the negative electrode current collector, negative electrode current collectors generally used in the art may be used, and, for example, copper, stainless steel, aluminum, nickel, titanium, calcined carbon; copper or stainless steel surface-treated with carbon, nickel, titanium, silver, etc.; aluminum-cadmium alloy; and the like may be used. The negative electrode current collector may typically have a thickness of 3 $\mu$m to 500 $\mu$m, and, like the positive electrode current collector, fine irregularities may be formed on the surface of the current collector to enhance the bonding force of the negative electrode active material. For example, the negative electrode current collector may be used in various forms such as films, sheets, foils, nets, porous materials, foams, or nonwoven fabrics.

The conductive material is used to impart conductivity to the negative electrode, and any material that has electronic conductivity without causing chemical change inside the battery may be used without particular limitations. Specific examples of the conductive material include graphite such as natural graphite or artificial graphite; carbon-based materials such as carbon black, acetylene black, Ketjen black, channel black, furnace black, lamp black, thermal black, carbon fiber, or carbon nanotube; metal powders or metal fibers such as copper, nickel, aluminum, or silver; conductive whiskers such as zinc oxide or potassium titanate; conductive metal oxides such as titanium oxide; and conductive polymers such as polyphenylene derivatives, which may be used alone or as a mixture. The conductive material may be typically included in an amount of 1 wt% to 30 wt%, preferably 1 wt% to 20 wt%, more preferably 1 wt% to 10 wt%, based on the total weight of the negative electrode active material layer.

The binder serves to improve the attachment among the particles of the negative electrode active material and the adhesion between the negative electrode active material and the negative electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, and carboxymethyl cellulose. (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated- EPDM, styrene butadiene rubber (SBR), fluoro rubber, or various copolymers thereof, and the like, which may be used alone or as a mixture. The binder may be included in an amount of 1 wt% to 30 wt%, preferably 1 wt% to 20 wt%, more preferably 1 wt% to 10 wt%, based on the total weight of the negative electrode active material layer.

The electrode assembly further includes a separator, and the separator is disposed in the electrode assembly in a manner interposed between the negative electrode and the positive electrode. The separator separates the negative electrode from the positive electrode and provides a path for lithium ion movement. Any material used as a separator in a lithium battery may be used without particular limitations.

The separator may use a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof used. In addition, conventional porous non-woven fabrics, for example, non-woven fabrics made of high melting point glass fibers, polyethylene terephthalate fibers, or the like may be used. In addition, a coated separator containing a ceramic component or a polymer material may be used to secure heat resistance or mechanical strength.

Another aspect of the present disclosure relates to a battery including the electrode assembly. The battery includes a battery case in which the electrode assembly and an electrolyte are accommodated together. As for the battery case, any case commonly used in the art such as a pouch type or a metal can type may be selected without particular limitation.

As the electrolyte used in the present disclosure, various electrolytes usable in lithium batteries, such as organic liquid electrolyte, inorganic liquid electrolyte, solid polymer electrolyte, gel polymer electrolyte, inorganic solid electrolyte, or molten inorganic electrolyte, may be used, and the type is not particularly limited.

Specifically, the electrolyte may include an organic solvent and a lithium salt.

The organic solvent may use any material that may serve as a medium through which ions involved in the electrochemical reaction of the battery may move without particular limitation. Specifically, as the organic solvent, ester-based solvents such as methyl acetate, ethyl acetate, $\gamma$-butyrolactone, or $\varepsilon$-caprolactone; ether-based solvents such as dibutyl ether or tetrahydrofuran; ketone-based solvents such as cyclohexanone; aromatic hydrocarbonbased solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC) or propylene carbonate (PC); alcohol-based solvents such as ethyl alcohol or isopropyl alcohol; nitriles such as R-CN (R is a C2 to C20 straight-chain, branched or cyclic hydrocarbon group, and may contain a double-bonded aromatic ring or an ether bond); amides such as dimethylformamide; dioxolanes such as 1,3-dioxolane; or sulfolanes may be used. Among them, carbonate-based solvents are preferred, and a mixture of cyclic carbonates (e.g., ethylene carbonate or propylene carbonate) having high ionic conductivity and high permittivity capable of increasing the charge and discharge performance of the battery and low-viscosity linear carbonate-based compound (e.g., ethyl methyl carbonate, dimethyl carbonate or diethyl carbonate) is more preferred.

As the lithium salt, any compound capable of providing lithium ions used in a lithium battery may be used without particular limitation. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$ or the like may be used as the lithium salt. The concentration of the lithium salt is preferably within the range of 0.1M to 5.0M, preferably 0.1M to 3.0M. When the concentration of the lithium salt is within the above range, the electrolyte has appropriate conductivity and viscosity, so it may exhibit excellent electrolyte performance, and lithium ions may move effectively.

In addition to the components of the electrolyte, the electrolyte may additionally include additives for the purpose of improving the lifespan characteristics of the battery, suppressing the decrease in battery capacity, and improving the discharge capacity of the battery. For example, haloalkylene carbonate-based compounds such as difluoroethylene carbonate, pyridine, triethylphosphite, triethanolamine, cyclic ether, ethylene diamine, n-glyme, hexamethyl phosphate triamid, nitrobenzene derivatives, sulfur, quinone imine dyes, N-substituted oxazolidinones, N,N-substituted imidazolidines, ethylene glycol dialkyl ethers, ammonium salts, pyrroles, 2-methoxy ethanol, aluminum trichloride or the like may be used alone or as a mixture as the additives, without being limited thereto. The additive may be included in an amount of 0.1 wt% to 10 wt%, preferably 0.1 wt% to 5 wt%, based on the total weight of the electrolyte.

In another embodiment of the present disclosure, the positive electrode may include a loading reduction portion with a smaller loading amount of the positive electrode active material, compared to an adjacent region. If the positive electrode has such a structure, the region of the positive electrode active material portion may be increased without worrying about precipitation of lithium. Accordingly, the energy density of the electrode assembly may be improved.

Recently, in order to realize high energy density and reduce cost, development is progressing in the direction of increasing the size of the battery. Depending on the size of the battery, as the energy increases, the resistance of battery should decrease. To reduce the resistance, a method of using the current collector of the electrode as an electrode tab rather than a method of attaching an electrode tab to the electrode may be used. At this time, due to the nature of the electrode manufacturing process of applying the electrode slurry on the electrode current collector, a portion in which the loading amount is reduced occurs at the boundary between the negative electrode active material portion coated with the negative electrode slurry and the negative electrode current collector. Considering the N/P ratio, there is a possibility that metallic lithium is precipitated on the positive electrode active material portion facing the portion where the loading amount is reduced. Here, the N/P ratio is a value obtained by dividing the capacity of the negative electrode, which is calculated considering the area and capacity per mass of the negative electrode, by the capacity of the positive electrode, which is obtained considering the area and capacity per mass of the positive electrode, and generally has a value of 1 or more. That is, the capacity of the negative electrode is adjusted large. For reference, if the N/P ratio is less than 1, metallic lithium is likely to be precipitated during charging and discharging, which causes rapid deterioration in safety of the battery during high rate charging and discharging. In other words, the N/P ratio has a significant effect on the safety and capacity of the battery. Due to the risk of metal lithium precipitation as described above, the positive electrode active material portion cannot be located on the portion of the positive electrode facing the portion where the loading amount of the negative electrode is reduced. This causes the energy density of the battery not to increase. Accordingly, in the present disclosure, the energy density is improved by increasing the region of the positive electrode active material portion.

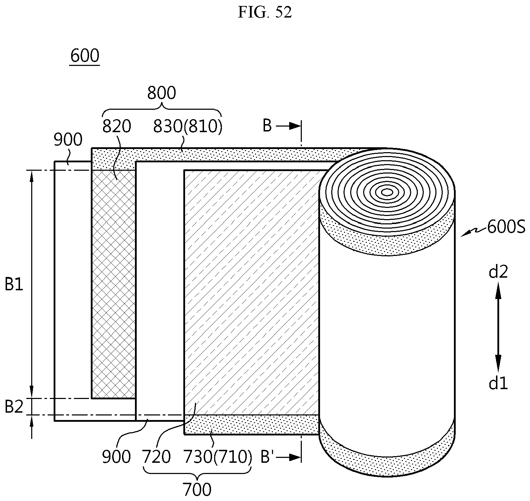

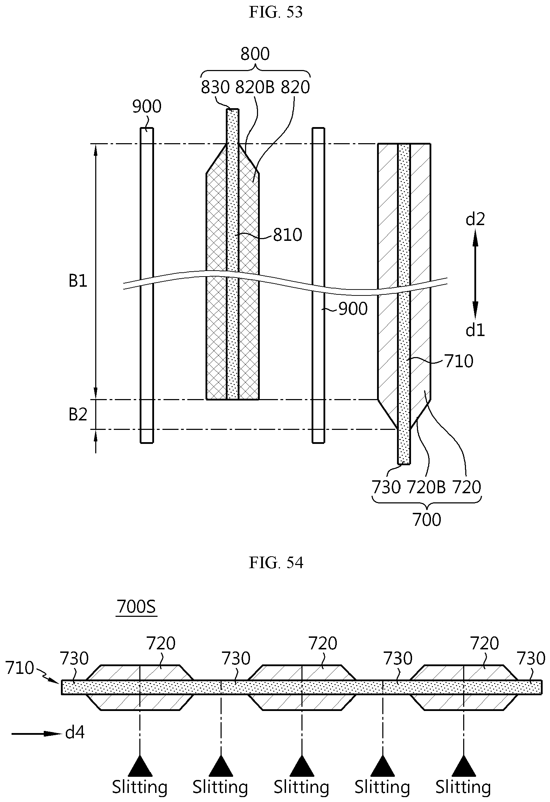

FIG. 52 is a diagram showing an electrode assembly according to an embodiment of the present disclosure, and FIG. 53 is a cross-sectional view, taken along the cutting line A-A' in FIG. 52.

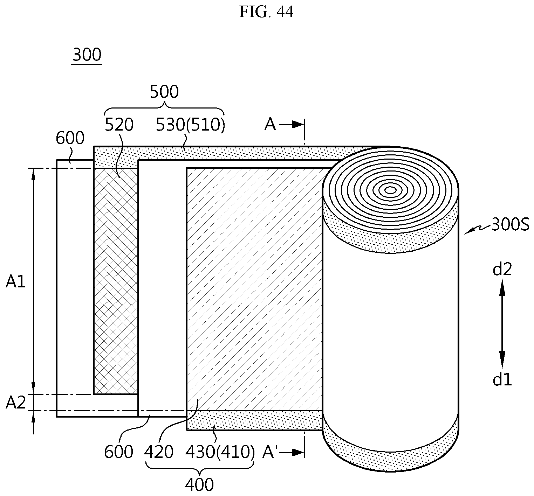

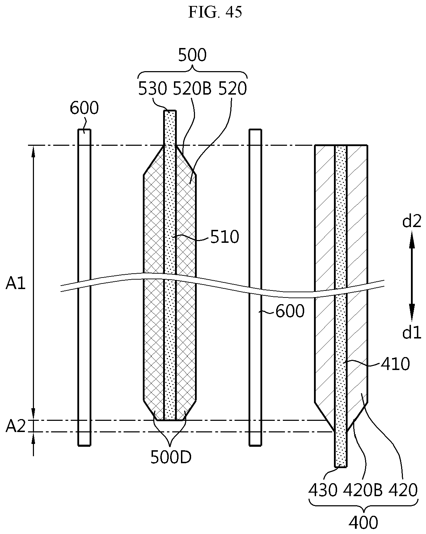

Referring to FIGS. 44 and 45, an electrode assembly 300 according to an embodiment of the present disclosure includes a negative electrode 400, a positive electrode 500, and a separator 600. The separator 600 is located between the negative electrode 400 and the positive electrode 500. The negative electrode 400, the positive electrode 500, and the separator 600 are wound together to form a jelly-roll structure 300S. Here, the jelly-roll structure 300S refers to a structure formed by winding the negative electrode 400, the positive electrode 500, and the separator 600. In addition, when the jelly-roll structure 300S is formed, it is preferable that a separator 600 is additionally disposed on the outer side in order to prevent the negative electrode 400 and the positive electrode 500 from contacting each other.

The negative electrode 400 includes a negative electrode current collector 410 and a negative electrode active material portion 420 formed by coating a negative electrode active material on the negative electrode current collector 410. In particular, as shown in the drawings, the negative electrode active material may be coated on both surfaces of the negative electrode current collector 410 to form the negative electrode active material portion 420. In addition, in the negative electrode current collector 410, a negative electrode uncoated portion 430 to which the negative electrode active material is not applied extends in the first direction d1. The negative electrode uncoated portion 430 extends along one end of the wound negative electrode 400. In addition, the negative electrode uncoated portion 430 extends beyond the separator 600 in the first direction d1. Accordingly, the negative electrode uncoated portion 430 may be exposed at one end in the first direction of the jelly-roll structure 300S.

The positive electrode 500 includes a positive electrode current collector 510 and a positive electrode active material portion 520 formed by coating a positive electrode active material on the positive electrode current collector 510. In particular, as shown in the drawings, the positive electrode active material may be coated on both surfaces of the positive electrode current collector 510 to form the positive electrode active material portion 520. Also, in the positive electrode current collector 510, a positive electrode uncoated portion 530 to which the positive electrode active material is not applied extends in the second direction d2. The positive electrode uncoated portion 530 extends along one end of the wound positive electrode 500. In addition, the positive electrode uncoated portion 530 extends beyond the separator 600 in the second direction d2. Accordingly, the positive electrode uncoated portion 530 may be exposed at one end in the second direction of the jelly-roll structure 300S.

Here, first direction d1 and second direction d2 are directions opposite to each other. Also, the first direction d1 and the second direction d2 may be directions parallel to the height direction of the jelly-roll structure 300S.

The electrode assembly 300 according to this embodiment has a structure in which a separate electrode tab is not attached, but the negative electrode uncoated portion 430 of the negative electrode current collector 410 and the positive electrode uncoated portion 530 of the positive electrode current collector 510 themselves are used as electrode tabs in order to reduce resistance.

Although not shown in the drawings, the negative electrode uncoated portion 430 and/or the positive electrode uncoated portion 530 may have substantially the same structure of the uncoated portion of the electrode described above.

In one embodiment, the positive electrode active material portion 520 includes a loading reduction portion 500D having a smaller loading amount of positive electrode active material than an adjacent area, and the loading reduction portion 500D is located at one end in the first direction d1 of the positive electrode 500. Also, more specifically, in the loading reduction portion 500D, the loading amount of the positive electrode active material may gradually decrease in the first direction d1.

Here, the loading amount means the amount of active material applied per unit area. In a portion having a large loading amount, a lot of negative electrode active material or positive electrode active material is applied to the unit area, so the negative electrode active material portion or the positive electrode active material portion may have a relatively greater thickness. In a portion having a small loading amount, a small amount of negative electrode active material or positive electrode active material is applied to the unit area, so the negative electrode active material portion or the positive electrode active material portion may have a relatively smaller thickness.

The active material portion may be formed by applying a slurry containing an active material. In this process, a boundary portion having a gradually decreasing loading amount may be formed between the uncoated portion and the active material portion.

Specifically, the negative electrode active material portion 420 may include a negative electrode boundary portion 420B forming a boundary between the negative electrode active material portion 420 and the negative electrode uncoated portion 430. The loading amount of the negative electrode boundary portion 420B may decrease in a direction toward the negative electrode uncoated portion 430.

Similarly, the positive electrode active material portion 520 may include a positive electrode boundary portion 520B forming a boundary between the positive electrode active material portion 520 and the positive electrode uncoated portion 530. The loading amount of the positive electrode boundary portion 520B may decrease in a direction toward the positive electrode uncoated portion 530.

The negative electrode boundary portion 420B or the positive electrode boundary portion 520B in which the loading amount gradually decreases as above is naturally generated in the process of applying the slurry containing the active material to the negative electrode current collector 410 or the positive electrode current collector 510.

In this case, in a region corresponding to the positive electrode boundary portion 520B, based on a direction perpendicular to the second direction d2, the amount of the positive electrode active material may be smaller than the amount of the negative electrode active material. Since the N/P ratio has a value greater than 1, the problem of precipitation of metallic lithium does not occur.

However, there is a problem in a region corresponding to the negative electrode boundary portion 420B. In the region corresponding to the negative electrode boundary portion 420B, based on a direction perpendicular to the first direction d1, the amount of the negative electrode active material may be smaller than the amount of the positive electrode active material. This may cause a problem of precipitation of metallic lithium because the N/P ratio has a value smaller than 1.

Accordingly, in this embodiment, the loading reduction portion 500D is provided on the positive electrode 500, and the negative electrode active material portion 420 may be located in a portion corresponding to the loading reduction portion 500D based on a direction perpendicular to the first direction d1. More specifically, the negative electrode boundary portion 420B may be located at a portion corresponding to the loading reduction portion 500D based on a direction perpendicular to the first direction d1.

The loading reduction portion 500D having a smaller loading amount of positive electrode active material than adjacent areas is provided at a position corresponding to the negative electrode boundary portion 420B having a gradually decreasing loading amount, so that the region where the positive electrode active material is applied may be increased without worrying about lithium precipitation. In particular, the loading amount of the positive electrode active material may gradually decrease in the loading reduction portion 500D along the first direction d1, corresponding to the shape of the negative electrode boundary portion 420B in which the loading amount gradually decreases in a direction toward the negative electrode uncoated portion 430. Therefore, it is possible to maintain a high N/P ratio of the negative electrode 400 and the positive electrode 500 in the region where the negative electrode boundary portion 420B is formed, thereby preventing lithium precipitation.

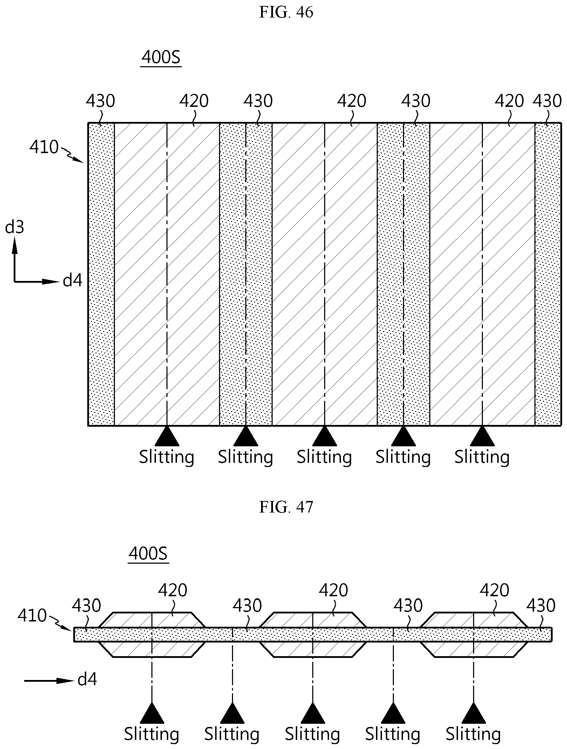

Hereinafter, a method for manufacturing an electrode assembly according to an embodiment of the present disclosure will be described in detail with reference to FIGS. 46 to 51.

FIGS. 46 and 47 are diagrams illustrating a process of manufacturing a negative electrode according to an embodiment of the present disclosure. Specifically, FIG. 46 is a plan view showing the negative electrode sheet from above, and FIG. 47 is a front view showing the negative electrode sheet of FIG. 46 from the front.

Referring to FIGS. 46 and 47, in the method for manufacturing an electrode assembly according to an embodiment of the present disclosure includes a step of manufacturing a negative electrode sheet 400S so that a negative electrode active material portion 420 coated with a negative electrode active material and a negative electrode uncoated portion 430 not coated with a negative electrode active material are alternately located on a negative electrode current collector 410.

Specifically, the negative electrode active material portion 420 may be formed by applying the negative electrode active material to extend along the third direction d3. In addition, a plurality of negative electrode active material portions 420 may be located to be spaced apart along the fourth direction d4 by spacing the coated portions along the fourth direction d4 perpendicular to the third direction d3. That is, the coating process may be performed so that the negative electrode uncoated portion 430 is positioned between the plurality of negative electrode active material portions 420.

Here, the third direction d3 and the fourth direction d4 are directions for explanation based on the negative electrode sheet 400S, and are directions unrelated to the first direction d1 and the second direction d2 in the jelly-roll structure 300S described above.

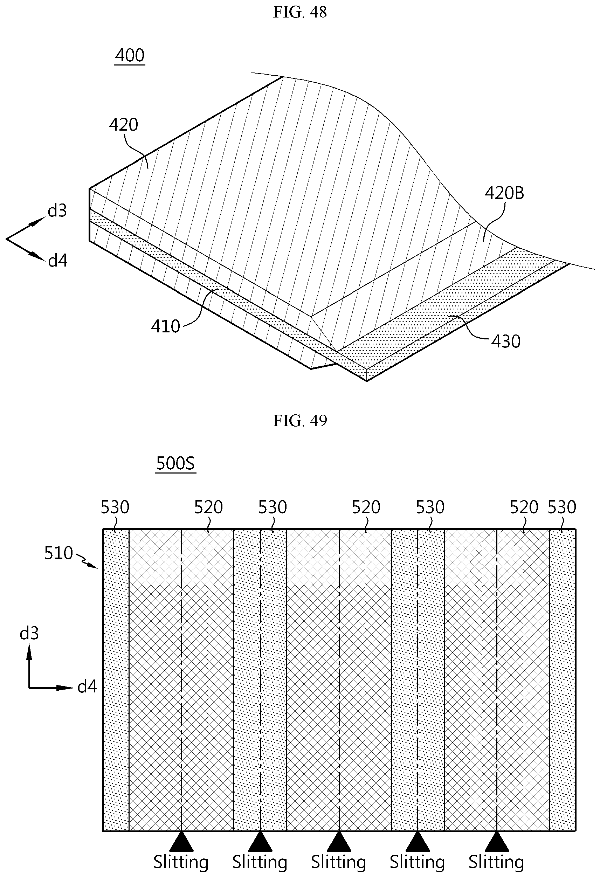

After that, a step of manufacturing a negative electrode 400 by slitting the negative electrode uncoated portion 430 and the negative electrode active material portion 420 may be followed. FIG. 48 is a perspective view showing a negative electrode according to an embodiment of the present disclosure.

Referring to FIGS. 46 to 48, slitting may be performed in a direction parallel to the third direction d3 for the negative electrode uncoated portion 430 and the negative electrode active material portion 420, respectively, as indicated by dotted lines in FIGS. 46 and 47. Accordingly, several negative electrodes 400 as shown in FIG. 48 may be manufactured from the negative electrode sheet 400S. That is, the negative electrode 400 of FIG. 48 corresponds to one of several negative electrodes manufactured by slitting the negative electrode sheet 400S of FIGS. 46 and 47. By slitting the negative electrode uncoated portion 430 and the negative electrode active material portion 420 of the negative electrode sheet 400S, respectively, the negative electrode 400 in which the negative electrode uncoated portion 430 extends at one side may be manufactured.

When forming the negative electrode active material portion 420, a slurry containing the negative electrode active material may be applied on the negative electrode current collector 410. In the process of applying the slurry, a negative electrode boundary portion 420B having a loading amount decreasing in a direction toward the negative electrode uncoated portion 430 may be formed at the boundary between the negative electrode active material portion 420 and the negative electrode uncoated portion 430.

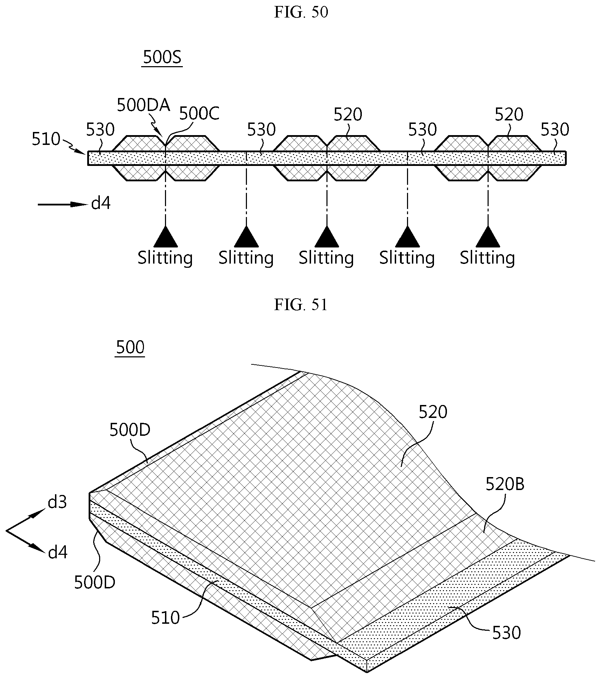

FIGS. 49 and 50 are diagrams showing a process of manufacturing a positive electrode according to an embodiment of the present disclosure. Specifically, FIG. 49 is a plan view showing the positive electrode sheet from above, and FIG. 50 is a front view showing the positive electrode sheet of FIG. 49 from the front.

Referring to FIGS. 49 and 50, the method for manufacturing an electrode assembly according to an embodiment of the present disclosure includes a step of manufacturing a positive electrode sheet 500S so that a positive electrode active material portion 520 coated with a positive electrode active material and a positive electrode uncoated portion 530 not coated with a positive electrode active material are alternately located on the positive electrode current collector 510.

Specifically, the positive electrode active material portion 520 may be formed by applying the positive electrode active material to extend along the third direction d3. In addition, a plurality of positive electrode active material portions 520 may be located to be spaced apart by adjusting the coating interval along the fourth direction d4 perpendicular to the third direction d3. That is, the coating process may be performed so that the positive electrode uncoated portion 530 is located between the plurality of positive electrode active material portions 520.

Here, third direction d3 and fourth direction d4 are directions for description based on the positive electrode sheet 500S, and are directions unrelated to the first direction d1 and the second direction d2 in the jelly-roll structure 300S described above.

After that, a step of manufacturing a positive electrode 500 by slitting the positive electrode uncoated portion 530 and the positive electrode active material portion 520 may be followed. FIG. 51 is a perspective view showing a positive electrode 500 according to an embodiment of the present disclosure.

Referring to FIGS. 49 to 51, slitting may be performed in a direction parallel to the third direction d3 for the positive electrode uncoated portion 530 and the positive electrode active material portion 520, respectively, as indicated by dotted lines in FIGS. 49 and 50. Accordingly, several positive electrodes 500 as shown in FIG. 51 may be manufactured from the positive electrode sheet 500S. That is, the positive electrode 500 of FIG. 51 corresponds to one of several positive electrodes manufactured by slitting the positive electrode sheet 500S of FIGS. 49 and 50. By slitting the positive electrode uncoated portion 530 and the positive electrode active material portion 520 of the positive electrode sheet 500S, respectively, the positive electrode 500 in which the positive electrode uncoated portion 530 extends at one side may be manufactured.

When forming the positive electrode active material portion 520, a slurry containing the positive electrode active material may be applied on the positive electrode current collector 510. In the process of applying the slurry, a positive electrode boundary portion 520B having a loading amount decreasing in a direction toward the positive electrode uncoated portion 530 may be formed at the boundary between the positive electrode active material portion 520 and the positive electrode uncoated portion 530.

Referring to FIGS. 44, 48 and 51 together, a step of forming a jelly-roll structure 300S by winding the negative electrode 400 and the positive electrode 500 together with the separator 600 may be followed. At this time, in the jelly-roll structure 300S, the negative electrode uncoated portion 430 may extend beyond the separator 600 in a first direction d1, and the positive electrode uncoated portion 530 may extend beyond the separator 600 in a second direction d2 opposite to the first direction d1.

Referring to FIGS. 49 to 51 again, in the method for manufacturing an electrode assembly according to an embodiment of the present disclosure, the positive electrode sheet 500S includes a loading reduction area 500DA in which the loading amount of the positive electrode active material is smaller than that of the adjacent area. There is no particular limitation in the method of forming the loading reduction area 500DA, and for example, it may be formed by adjusting the degree of coating of the slurry.

In the step of manufacturing the positive electrode 500, the loading reduction area 500DA of the positive electrode active material portion 520 is slit. The slitted loading reduction area 500DA forms a loading reduction portion 500D having a smaller loading amount of the positive electrode active material than the adjacent area in the jelly-roll structure 300S shown in FIGS. 44 and 45.

Specifically, a loading reduction area 500DA having a smaller loading amount of the positive electrode active material than the adjacent area is formed in the positive electrode active material portion 520 formed on the positive electrode sheet 500S. As shown in FIG. 50, the loading reduction area 500DA may be formed in the center of the positive electrode active material portion 520. Meanwhile, the loading reduction area 500DA may be configured such that the loading amount of the positive electrode active material gradually decreases toward the center portion 500C of the loading reduction area 500DA, and in the step of manufacturing the positive electrode 500, the loading reduction portion 500D according to this embodiment may be provided by slitting the center portion 500C of the loading reduction area 500DA.

That is, in applying the slurry containing a positive electrode active material, by forming the loading reduction area 500DA and slitting the center portion 500C of the loading reduction area 500DA, several positive electrodes 500 having the loading reduction portion 500D may be manufactured.

Referring to FIG. 51, the loading reduction portion 500D may be provided at one end of the manufactured positive electrode 500, and the positive electrode uncoated portion 530 may be provided at the other end of the positive electrode 500 opposite to the one end.

Referring to FIGS. 44 and 45, when the positive electrode 500 is wound to form a jelly-roll structure 300S, the loading reduction portion 500D may be located at one end in the first direction d1 of the positive electrode 500, and the positive electrode uncoated portion 530 may be located at one end in the second direction d2 of the positive electrode 500.

In addition, as the center portion 500C of the loading reduction area 500DA is slitted, the loading amount of the positive electrode active material in the loading reduction portion 500D may gradually decrease along the first direction d1.

In addition, in the jelly-roll structure 300S, the negative electrode active material portion 420 may be located at a portion corresponding to the loading reduction portion 500D based on a direction perpendicular to the first direction d1. More specifically, in the jelly-roll structure 300S, the negative electrode boundary portion 420B may be located at a portion corresponding to the loading reduction portion 500D based on a direction perpendicular to the first direction d1.

The corresponding positional relationship between the loading reduction portion 500D and the negative electrode boundary portion 420B has already been described above and thus will not be described again.

Hereinafter, with reference to FIGS. 52 to 55, an electrode assembly according to a comparative example will be described, and advantages of the electrode assembly according to this embodiment compared to the electrode assembly according to the comparative example will be described.

FIG. 52 is a diagram showing an electrode assembly according to a comparative example. FIG. 53 is a cross-sectional view, taken along the cutting line B-B' in FIG. 52.

Referring to FIGS. 52 and 53, the electrode assembly 600 according to the comparative example includes a negative electrode 700, a positive electrode 800 and a separator 900, and the negative electrode 700, the positive electrode 800 and the separator 900 are wound to form a jelly-roll structure 600S.

The negative electrode 700 may include a negative electrode current collector 710, a negative electrode active material portion 720, and a negative electrode uncoated portion 730. In addition, the negative electrode uncoated portion 730 may extend in the first direction d1, and the negative electrode active material portion 720 may include a negative electrode boundary portion 720B that forms a boundary between the negative electrode active material portion 720 and the negative electrode uncoated portion 730 and has a gradually decreasing loading amount.

FIG. 54 is a diagram showing a process of manufacturing a negative electrode 700 according to a comparative example.

Referring to FIG. 54, after the negative electrode sheet 700S is manufactured so that the negative electrode active material portion 720 and the negative electrode uncoated portion 730 are alternately positioned along the fourth direction d4, a plurality of negative electrodes 700 may be manufactured by slitting the negative electrode uncoated portion 730 and the negative electrode active material portion 720.

Meanwhile, referring to FIGS. 52 and 53 again, the positive electrode 800 may include a positive electrode current collector 810, a positive electrode active material portion 820, and a positive electrode uncoated portion 880. In addition, the positive electrode uncoated portion 830 may extend in the second direction d2 opposite to the first direction d1, and the positive electrode active material portion 820 may include a positive electrode boundary portion 820B that forms a boundary between the positive electrode active material portion 820 and the positive electrode uncoated portion 830 and has a gradually decreasing loading amount.

FIG. 55 is a diagram showing a process of manufacturing a positive electrode 800 according to a comparative example.

Referring to FIG. 55, after the positive electrode sheet 800S is manufactured so that the positive electrode active material portion 820 and the positive electrode uncoated portion 830 are alternately positioned along the fourth direction d4, a plurality of positive electrodes 800 may be manufactured by slitting the positive electrode uncoated portion 830 and the positive electrode active material portion 820.

After that, the negative electrode 700 and the positive electrode 800 manufactured as above may be wound together with the separator 900 to manufacture an electrode assembly 600 according to the comparative example.

That is, the electrode assembly 600 according to the comparative example may have a structure similar to that of the electrode assembly 300 according to this embodiment, except for the loading reduction portion 500D (see FIG. 49).

Referring to FIGS. 52 and 53, in the case of the electrode assembly 600 according to the comparative example, the positive electrode active material portion 820 cannot be located in a portion corresponding to the negative electrode boundary portion 720B, based on a direction perpendicular to the first direction d1. If the positive electrode active material portion 820 extends to a portion corresponding to the negative electrode boundary portion 720B, the corresponding portion has a low N/P ratio value and is highly likely to precipitate metallic lithium. Therefore, in order to prevent lithium precipitation, the length of the positive electrode active material portion 820 must be limited. That is, the positive electrode active material portion 820 can be formed only in the region B 1 shown in the drawing, and the positive electrode active material portion 820 cannot be formed in the region B2. This results in reducing the length of the positive electrode active material portion 820 due to the negative electrode boundary portion 720B.

Meanwhile, referring to FIGS. 44 and 45, in the case of the electrode assembly 300 according to this embodiment, based on the direction perpendicular to the first direction d1, the positive electrode active material portion 520, particularly the loading reduction portion 500D, may be located in a portion corresponding to the negative electrode boundary portion 420B. Since the loading reduction portion 500D having a smaller loading amount of the positive electrode active material than the adjacent area is provided at a position corresponding to the negative electrode boundary portion 420B, the N/P ratio in the corresponding portion may be maintained high and lithium precipitation may be prevented. Accordingly, the positive electrode active material portion 520 may be formed as much as the region A1, and the region A2 in which the positive electrode active material portion 520 cannot be formed may be reduced. For example, the width of the positive electrode 500 in the height direction compared to the width of the negative electrode 400 in the height direction may be increased to 98% or more.

If the region A1 of FIGS. 44 and 45 is compared with the region B1 of FIGS. 52 and 53, in the electrode assembly 300 according to this embodiment, the length of the positive electrode active material portion may be increased as much as the loading reduction portion 500D, and thus a higher energy density may be provided in a limited space compared to the electrode assembly 600 according to the comparative example.

Another aspect of the present disclosure relates to a cylindrical battery, which includes a jelly-roll type electrode assembly having a structure in which a positive electrode, a negative electrode, and a separator interposed between the positive electrode and the negative electrode are wound in one direction; a cylindrical battery housing in which the electrode assembly is accommodated; and a battery cap serving as a sealing body disposed at the upper portion of the battery housing to seal the battery housing. Here, the positive electrode is prepared according to the present disclosure and includes single particle-based active material particles having an average particle diameter $D_{50}$ of 5 $\mu$m or less as the positive electrode active material. The cylindrical battery may further include an electrolyte, and the above description may be referred to for the electrolyte.

The electrode assembly may have a stack type, stack/folding type, or jelly-roll type structure as described above. In one specific embodiment of the present disclosure, in the electrode assembly, the positive electrode may have a loading reduction portion as described above.

In the case of a conventional cylindrical battery, current is concentrated on a stripshaped electrode tab, resulting in great resistance, high heat generation, and poor current collection efficiency.

As the demand for high-capacity batteries increases with the recent development of electric vehicle technology, the development of bulky large-sized cylindrical batteries is required. In the case of a conventional small cylindrical battery generally used in the art, that is, a cylindrical battery having a form factor of 1865 or 2170, resistance or heat generation does not seriously affect battery performance because the capacity is small. However, when the specifications of the conventional small cylindrical battery are applied as they are to a large cylindrical battery, a serious problem may occur in battery safety.

As the size of the battery increases, the amount of heat and gas generated inside the battery also increases, and the temperature and pressure inside the battery rise due to such heat and gas, which may cause the battery to ignite or explode. In order to prevent this, heat and gas inside the battery must be properly discharged to the outside, and for this, the cross-sectional area of the battery, which serves as a passage for discharging heat to the outside of the battery, must increase to match the increase in volume. However, in general, since the increase in cross-sectional area does not reach the increase in volume, as the size of the battery increases, the amount of heat generated inside the battery increases, resulting in problems such as increased risk of explosion and reduced output. In addition, when rapid charging is performed at a high voltage, a large amount of heat is generated around the electrode tab for a short period of time, and the battery may ignite. Accordingly, the present disclosure proposes a cylindrical battery having a high safety while having a large volume to implement a high capacity.

In addition, since a high loading electrode to which the positive electrode active material in the form of single particle or pseudo-single particle is applied may be applied to the cylindrical battery, the initial resistance characteristics and charge/discharge efficiency of the cylindrical battery may be improved.

The cylindrical battery according to the present disclosure significantly reduces gas generation compared to the prior art by applying a positive electrode active material in the form of single particle or pseudo-single particle. Accordingly, even a large cylindrical battery having a form factor ratio of 0.4 or more may exhibit excellent safety.

The cylindrical battery according to the present disclosure may preferably be a battery having a tab-less structure that does not include an electrode tab, but is not limited thereto.

In the battery of the tab-less structure, for example, each of the positive electrode and the negative electrode includes an uncoated portion on which an active material layer is not formed, and may have a structure in which the positive electrode uncoated portion and the negative electrode uncoated portion are respectively located at the upper and lower ends of the electrode assembly, a collector plate is coupled to the positive electrode uncoated portion and the negative electrode uncoated portion, and the collector plate is connected to an electrode terminal.

When the cylindrical battery is formed in a tab-less structure as described above, since the concentration of current is less than that of the conventional battery equipped with an electrode tab, heat generation inside the battery may be effectively reduced, thereby improving the thermal safety of the battery.

Hereinafter, the present disclosure will be described in more detail through specific examples.

Example 1

A single particle type positive electrode active material $Li[Ni_{0.9}Co_{0.06}Mn_{0.03}Al_{0.01}]O_2$ having a unimodal particle size distribution with an average particle diameter $D_{50}$ of 3 $\mu$m: carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.

A negative electrode active material (graphite : SiO = 95 : 5 mixture by weight) : conductive material (super C), : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.

A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a cylindrical battery housing, and an electrolyte was injected thereto to prepare a 4680 cell.

Comparative Example 1

A 4680 cell was manufactured in the same manner as in Example 1, except that secondary particle type $Li[Ni_{0.9}Co_{0.05}Mn_{0.04}Al_{0.01}]O_2$ having a bimodal particle size distribution with a large particle average diameter $D_{50}$ of 9 $\mu$m and a small particle average diameter $D_{50}$ of 4 $\mu$m was used as the positive electrode active material.

Experimental Example 1

A hot box test was performed on the 4680 cells manufactured by Example 1 and Comparative Example 1.

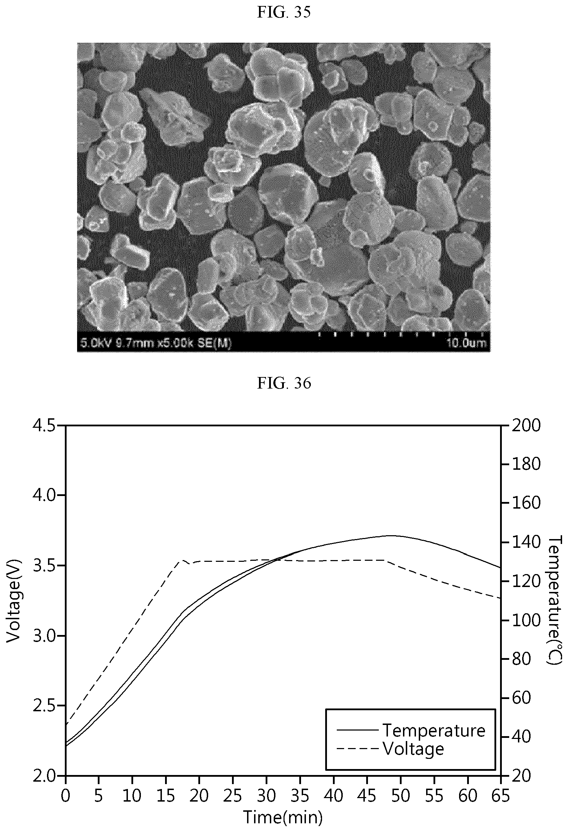

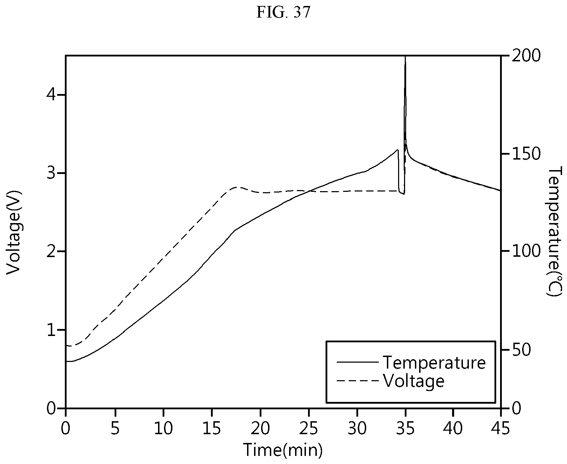

Specifically, each of the 4680 cells manufactured by Example 1 and Comparative Example 1 was placed in a hot box chamber at room temperature, heated to 130°C at a heating rate of 5°C/min, and maintained for 30 minutes to perform a hot box evaluation, and the temperature change of the battery over time was measured. For accurate evaluation, the hot box evaluation was performed twice on the cell of Example 1. The measurement results are shown in FIGS. 36 and 37.

FIG. 36 is a graph showing a hot box test result of the 4680 cell manufactured by Example 1 of the present disclosure, and FIG. 37 is a graph showing a hot box test result of the 4680 cell manufactured by Comparative Example 1.

Through FIGS. 36 and 37, it may be found that in the case of the lithium secondary battery of Example 1 using the single particle positive electrode active material, the voltage and temperature of the battery were maintained stably until 65 minutes, whereas in the lithium secondary battery of Comparative Example 1, the temperature of the battery rapidly increased after 35 minutes.

Example 2-1

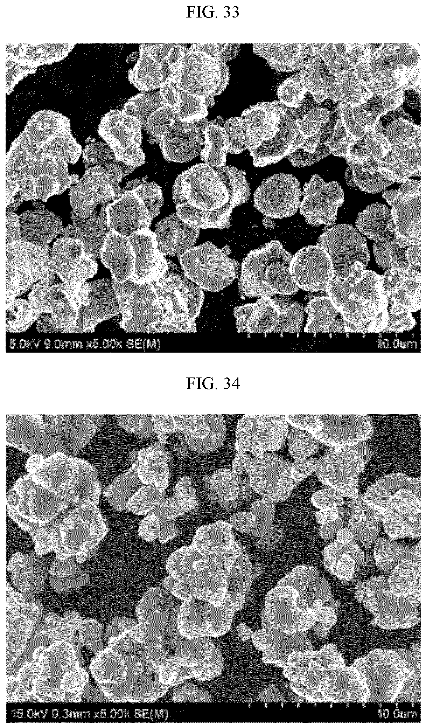

A positive electrode active material (composition: Li[Ni$_{0.9}$Co$_{0.06}$Mn$_{0.03}$Al$_{0.01}$]O$_2$), which has a unimodal particle size distribution where D$_{min}$ = 1.78 $\mu$m, D$_{50}$ = 4.23 $\mu$m, and D$_{max}$ =13.1 $\mu$m and in which single particles and pseudo-single particles were mixed was prepared. FIG. 33 shows a SEM picture of the positive electrode active material used in Example 2-1.

The positive electrode active material : carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.

A negative electrode active material (graphite : SiO = 95 : 5 mixture by weight) : conductive material (super C) : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.

A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a battery housing, and an electrolyte was injected thereto to prepare a 4680 cell.

Example 2-2

A 4680 cell was manufactured in the same manner as in Example 2-1, except that a positive electrode active material (composition: Li[Ni$_{0.9}$Co$_{0.06}$Mn$_{0.03}$Al$_{0.01}$]O$_2$), which has a unimodal particle size distribution where D$_{min}$ = 1.38 $\mu$m, D$_{50}$ = 4.69 $\mu$m, and D$_{max}$ =18.5 $\mu$m and in which single particles and pseudo-single particles were mixed was used as the positive electrode active material. FIG. 34 shows a SEM picture of the positive electrode active material used in Example 2-2.

Comparative Example 2-1

A 4680 cell was manufactured in the same manner as in Example 2-1, except that a secondary particle type positive electrode active material (composition: Li[Ni$_{0.9}$Co$_{0.05}$Mn$_{0.04}$Al$_{0.01}$]O$_2$) having a bimodal particle size distribution with a large particle average diameter D$_{50}$ of 9 $\mu$m and a small particle average diameter D$_{50}$ of 4 $\mu$m was used as the positive electrode active material.

Comparative Example 2-2

A 4680 cell was manufactured in the same manner as in Example 2-1, except that a positive electrode active material (composition: Li[Ni$_{0.9}$Co$_{0.06}$Mn$_{0.03}$Al$_{0.01}$]O$_2$), which has a unimodal particle size distribution where D$_{min}$ = 0.892 $\mu$m, D$_{50}$ = 3.02 $\mu$m, and D$_{max}$ =11 $\mu$m and in which single particles and pseudo-single particles were mixed was used as the positive electrode active material.

FIG. 35 shows a SEM picture of the positive electrode active material used in Comparative Example 2-2.

Experimental Example 2-1

A hot box test was performed on the 4680 cells manufactured by Examples 2-1 and 2-2 and Comparative Examples 2-1 and 2-2.

Specifically, each of the 4680 cells manufactured by Example 2-1 and Comparative Example 2-1 was placed in a hot box chamber at room temperature, heated up to 130°C at a heating rate of 5°C/min, and maintained for 30 minutes, and then the temperature change of the cell was measured. A case in which thermal runaway and ignition did not occur during the test was marked as Pass, and a case in which thermal runaway and/or ignition occurred was marked as Fail. Also, for the accuracy of the test, the test was performed more than twice for the cells of Examples 2-1 and 2-2.

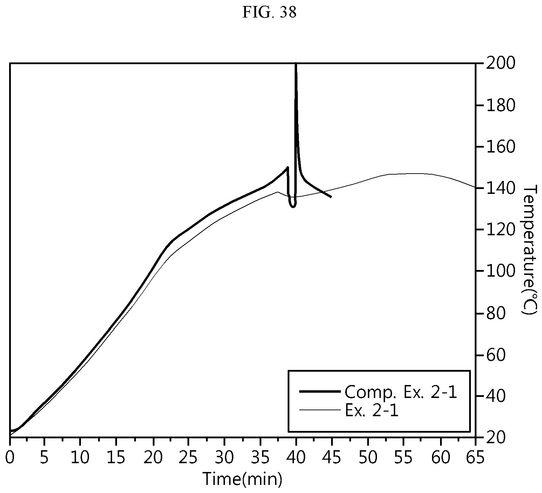

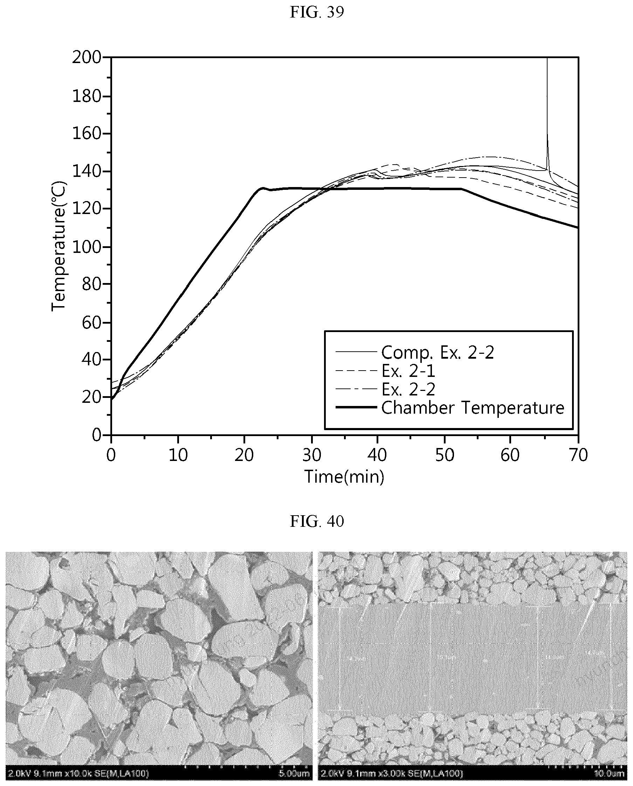

Measurement results are shown in Table 1 below and FIGS. 38 and 39. FIG. 38 is a graph showing hot box test results of Sample 1 of Example 2-1 and the 4680 cell manufactured by Comparative Example 2-1, and FIG. 39 is a graph showing hot box test results of Samples 2 and 3 of Example 2-1, Samples 1 and 2 of Example 2-2, and the 4680 cell manufactured by Comparative Example 2-2.

Table 1

| | Sample # | Venting time (min) | Maximum temperature (°C) | Hot box test result |
|---|---|---|---|---|
| Example 2-1 | 1 | 16 | 139 | Pass |
| | 2 | 20.9 | 141 | Pass |
| | 3 | 23.7 | 137 | Pass |
| Example 2-2 | 1 | 16.0 | 148 | Pass |
| | 2 | 15.8 | 147 | Pass |
| Comparative Example 2-1 | 1 | 17 | not measurable | Fail |
| Comparative Example 2-2 | 1 | 16.2 | not measurable | Fail |

Referring to Table 1 and FIGS. 38 and 39, it may be found that, in the case of the 4680 cell of Example 2-1 to which the positive electrode active material in the form of a single particle/pseudo-single particle with $D_{min}$ of 1.0 $\mu$m or more was applied, the voltage and temperature of the battery were maintained stably until 65 minutes, while in the case of the 4680 cells of Comparative Example 2-1 in which a secondary particle was applied as the positive electrode active material and Comparative Example 2-2 in which a positive electrode active material in the form of a single particle/pseudo-single particle with $D_{min}$ of less than 1.0 $\mu$m was applied, the battery temperature of the 4680 cell rapidly increased.

Experimental Example 2-2

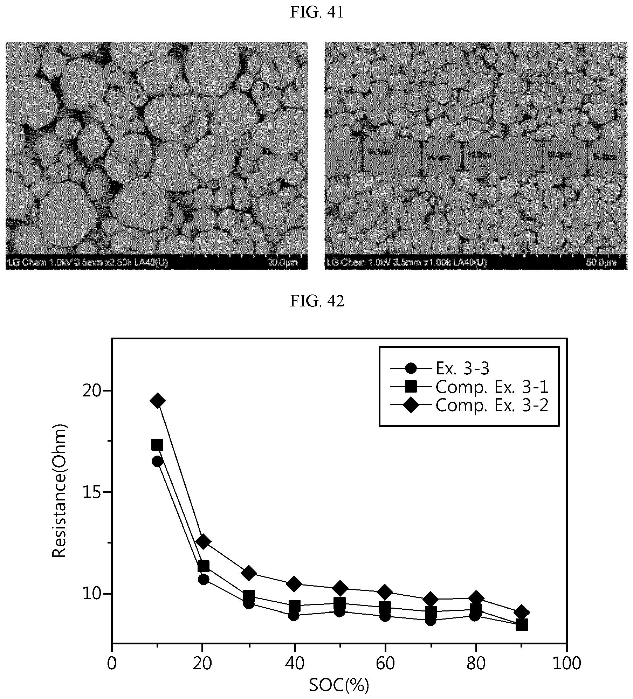

After rolling the positive electrodes manufactured in Example 2-1 and Comparative Example 2-1, in order to check the degree of breakage of the positive electrode active material particles, the positive electrode was cut with an ion milling device and the cross section was photographed with a SEM. FIG. 40 shows a cross-sectional SEM picture of the positive electrode manufactured in Example 2-1, and FIG. 41 shows a cross-sectional SEM picture of the positive electrode manufactured in Comparative Example 2-1.

Through FIGS. 40 and 41, the positive electrode of Example 2-1 has almost no particle breakage of the positive electrode active material even after rolling, whereas in the positive electrode of Comparative Example 2-2 using secondary particles, a number of cracks were observed in the particles of the positive electrode active material after rolling.

Example 3-1

A positive electrode active material powder (composition: $Li[Ni_{0.9}Co_{0.06}Mn_{0.03}Al_{0.01}]O_2$), which has a unimodal particle size distribution where $D_{min}$ = 1.78 $\mu$m, $D_{50}$ = 4.23 $\mu$m, $D_{max}$ = 13.1 $\mu$m and in which single particles and pseudo-single particles were mixed, flake graphite (SFG6L), conductive material (multi-wall carbon nanotube), and PVDF binder were mixed in N-methyl pyrrolidone at a weight ratio of 96.3 : 1.5 : 0.4 : 1.8 to prepare a positive electrode slurry. The positive electrode slurry was coated on one surface of an aluminum current collector sheet, dried, and rolled at a linear pressure of 3.0 ton/cm to prepare a positive electrode. The porosity of the positive electrode active material layer of the positive electrode prepared as described above was measured, and the porosity was measured to be 17.5%.

Example 3-2

A positive electrode was manufactured in the same manner as in Example 3-1, except that the positive electrode active material, flake graphite, conductive material, and binder were mixed in a weight ratio of 97.2 : 0.6 : 0.4 : 1.8, and the porosity of the positive electrode active material layer was measured. The porosity of the positive electrode active material layer was measured to be 19%.

Example 3-3

A positive electrode was manufactured in the same manner as in Example 3-1, except that the positive electrode active material, flake graphite, conductive material, and binder were mixed in a weight ratio of 97.4 : 0.4 : 0.4 : 1.8, and the porosity of the positive electrode active material layer was measured. The porosity of the positive electrode active material layer was measured to be 20%.

Example 3-4

A positive electrode was manufactured in the same manner as in Example 3-1, except that the positive electrode active material, flake graphite, conductive material, and binder were mixed in a weight ratio of 97.6 : 0.2 : 0.4 : 1.8, and the porosity of the positive electrode active material layer was measured. The porosity of the positive electrode active material layer was measured to be 21%.

Comparative Example 3-1

A positive electrode was prepared in the same manner as in Example 3-1, except that the positive electrode slurry was prepared by mixing the positive electrode active material, conductive material, and binder in N-methyl pyrrolidone at a weight ratio of 97.8 : 0.4 : 1.8 without adding flake graphite, and the porosity of the positive electrode active material layer was measured. The porosity of the positive electrode active material layer was measured to be 24%.

Comparative Example 3-2

A positive electrode was manufactured in the same manner as in Example 3-1 except that the positive electrode active material, conductive material, and binder were mixed in N-methyl pyrrolidone at a weight ratio of 97.8 : 0.4 : 1.8 to prepare a positive electrode slurry, and rolled at a line pressure of 2.0 ton/cm without adding flake graphite, and the porosity of the positive electrode active material layer was measured. The porosity of the positive electrode active material layer was measured to be 30%.

Experimental Example 3-1 - Measurement of charge/discharge capacity and charge/discharge efficiency

Coin half-cells including the positive electrodes according to Examples 3-1 to 3-4 and Comparative Examples 3-1 and 3-2 were manufactured, charged up to 4.25V under a 0.2C current condition, and then discharged to 2.5V under a 0.2C current condition, and the charge capacity (mAh/g) and discharge capacity (mAh/g) of each coin half-cell were measured. The measurement results are shown in Table 2 below.

Table 2

| | Add amount of flake graphite (wt%) | Porosity (%) | Charging capacity (mAh/g) | Discharging capacity (mAh/g) | Efficiency (%) |
|---|---|---|---|---|---|
| Example 3-1 | 1.5 | 17.5 | 230.3 | 209.3 | 90.9 |
| Example 3-2 | 0.6 | 19 | 229.4 | 206.9 | 90.2 |
| Example 3-3 | 0.4 | 20 | 230.4 | 207.3 | 90.0 |
| Example 3-4 | 0.2 | 21 | 229.1 | 205.5 | 89.7 |
| Comparative Example 3-1 | 0 | 24 | 229.1 | 204.2 | 89.1 |
| Comparative Example 3-2 | 0 | 30 | 225.4 | 199.7 | 88.6 |

Through Table 2, it may be found that Examples 3-1 to 3-4 using an positive electrode to which flake graphite is added shows lower porosity and excellent capacity characteristics compared to Comparative Examples 3-1 to 3-2.

Experimental Example 3-2 - Check resistance characteristics

While charging the coin half-cells including the positive electrodes according to Example 3-3, Comparative Example 3-1, and Comparative Example 3-2 to 4.2V, resistance characteristics according to SOC were measured. The experimental results are shown in FIG. 42.

Referring to FIG. 42, it may be found that the resistance value of Example 3-3, in which flake graphite is added to the positive electrode active material layer, is lower than those of Comparative Example 3-1 and Comparative Example 3-2, which do not include flake graphite, based on SOC 10%. This shows that when flake graphite is added to the positive electrode active material layer, resistance characteristics at low SOC are improved.

Experimental Example 3-3 - Measurement of high-temperature life characteristics and resistance increase rate

A separator was interposed between the positive electrode and the negative electrode according to Example 3-1, Example 3-3, and Comparative Example 3-1, and stacked in the order of separator/positive electrode/separator/negative electrode, and then wound to prepare a jelly-roll type electrode assembly. The electrode assembly prepared as described above was inserted into a cylindrical battery housing, and then an electrolyte was injected thereto to manufacture a 4680 cell.

At this time, a negative electrode active material (graphite : SiO = 95: 5 mixture by weight): conductive material (super C): styrene-butadiene rubber (SBR): carboxymethyl cellulose (CMC) were mixed in water at a weight ratio of 96: 2: 1.5 : 0.5 to prepare a negative electrode slurry, and then the negative electrode slurry was coated on to one surface of a copper current collector sheet, dried at 150°C, and then rolled to prepare a negative electrode.

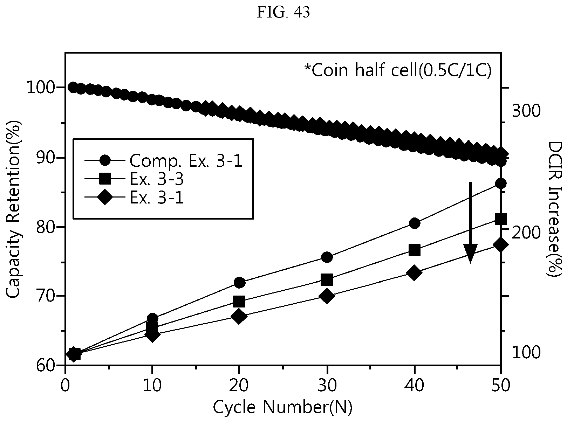

Based on one cycle in which the 4680 cell prepared as described above was charged to 4.2V at 40°C at 0.5C and then discharged to 2.5V at 0.5C, 50 cycles of charge and discharge were performed, and then capacity retention and resistance increase rate (DCIR increase) were measured. The measurement results are shown in FIG. 43.

Referring to FIG. 43, in the case of the secondary batteries of Examples 3-1 and 3-3, it is shown that the change in capacity retention according to the number of cycles is smaller than that of the secondary battery of Comparative Example 3-1, and the change in resistance increase rate according to the number of cycles is also small.

In the cylindrical battery of the present disclosure, the positive electrode as described above may be the first electrode, and the negative electrode may be the second electrode. In contrast, the positive electrode may be the second electrode, and the negative electrode may be the first electrode.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A cylindrical battery, comprising:

   an electrode assembly including a first electrode having a first uncoated portion and a second electrode having a second uncoated portion;
   a battery housing configured to accommodate the electrode assembly through an open portion formed in one side and electrically connected to the second uncoated portion;
   a cap plate configured to seal the open portion of the battery housing;
   a current collecting plate having a rim portion, an uncoated portion coupling portion extending inwardly from the rim portion and coupled to the first uncoated portion, and a terminal coupling portion spaced apart from the uncoated portion coupling portion;
   an electrode terminal riveted through a perforated hole formed in a closed portion provided opposite to the open portion of the battery housing and coupled to the terminal coupling portion; and
   an insulating gasket interposed between the electrode terminal and the perforated hole,
   wherein the electrode terminal includes:

   a body portion inserted into the perforated hole;
   an outer flange portion configured to extend along an outer surface of the closed portion from a circumference of one side of the body portion exposed through the outer surface of the closed portion of the battery housing;
   an inner flange portion configured to extend toward an inner surface of the closed portion from a circumference of the other side of the body portion exposed through the inner surface of the closed portion; and
   a flat portion provided on an inner side of the inner flange portion and coupled to the terminal coupling portion.

2. The cylindrical battery according to claim 1,
   wherein the uncoated portion coupling portion and the terminal coupling portion are electrically connected by the rim portion.

3. The cylindrical battery according to claim 1,
   wherein the terminal coupling portion is located in the center of an inner space of the rim portion.

4. The cylindrical battery according to claim 1,

wherein the current collecting plate further includes a connection portion extending inwardly from the rim portion and connected to the terminal coupling portion.

5. The cylindrical battery according to claim 4,
   wherein the connection portion has a notching portion formed to reduce the width of the connection portion.

6. The cylindrical battery according to claim 1,
   wherein the uncoated portion coupling portion is coupled onto a coupling surface formed by bending an end of the first uncoated portion along a direction parallel to the current collecting plate.

7. The cylindrical battery according to claim 1,
   wherein the cap plate is not electrically connected to the electrode assembly to have no polarity.

8. The cylindrical battery according to claim 1,
   wherein the flat portion and the inner surface of the closed portion are parallel to each other.

9. The cylindrical battery according to claim 1,
   wherein an angle between the inner flange portion and the inner surface of the closed portion is 0 degrees to 60 degrees.

10. The cylindrical battery according to claim 1,
    wherein a recess portion is provided between the inner flange portion and the flat portion.

11. The cylindrical battery according to claim 10,
    wherein the recess portion has a cross-sectional structure of an asymmetric groove.

12. The cylindrical battery according to claim 11,
    wherein the asymmetrical groove includes a sidewall of the flat portion and an inclined surface of the inner flange portion connected to an end of the sidewall.

13. The cylindrical battery according to claim 12,
    wherein the sidewall is perpendicular to the inner surface of the closed portion.

14. The cylindrical battery according to claim 1,
    wherein the thickness of the inner flange portion decreases as being away from the body portion.

15. The cylindrical battery according to claim 1,
    wherein the insulating gasket includes:

    an outer gasket interposed between the outer flange portion and the outer surface of the closed portion; and
    an inner gasket interposed between the inner flange portion and the inner surface of the closed portion,
    wherein the inner gasket and the outer gasket have different thicknesses depending on positions thereof.

16. The cylindrical battery according to claim 15,
    wherein among the area of the inner gasket, an area interposed between an inner edge of the perforated hole connected to the inner surface of the closed portion and the inner flange portion has a relatively smaller thickness than other area.

17. The cylindrical battery according to claim 16,
    wherein the inner edge of the perforated hole includes an opposing surface facing the inner flange portion.

18. The cylindrical battery according to claim 15,
    wherein the inner gasket extends longer than the inner flange portion.

19. The cylindrical battery according to claim 15,
    wherein based on the inner surface of the closed portion, the height of the flat portion is greater than or equal to the height of an end of the inner gasket.

**20.** The cylindrical battery according to claim 1,
wherein based on the inner surface of the closed portion, the height of the flat portion is greater than or equal to the height of an end of the inner flange portion.

**21.** The cylindrical battery according to claim 1,

wherein the active material layer of the first electrode includes a positive electrode active material containing a single particle, a pseudo-single particle, or a combination thereof,
$D_{min}$, which a minimum particle size in a cumulative volume distribution of the positive electrode active material, is 1.0 $\mu$m or more;
in the volume cumulative distribution of the positive electrode active material, $D_{50}$, which is a particle size when a volume cumulative amount is 50%, is 5.0 $\mu$m or less, and
$D_{max}$, which is a maximum particle size in the volume cumulative distribution of the positive electrode active material, is 12 $\mu$m to 17 $\mu$m.

**22.** The cylindrical battery according to claim 21,
wherein the positive electrode active material has a unimodal particle size distribution showing a single peak in a volume cumulative particle size distribution graph, and the particle size distribution (PSD) represented by the following formula is 3 or less:

$$PSD = (D_{max} - D_{min})/D_{50}.$$

**23.** The cylindrical battery according to claim 21,
wherein the single particle, the pseudo-single particle, or the combination thereof is included in an amount of 95 wt% to 100 wt% based on the total weight of the positive electrode active material included in the active material layer of the first electrode.

**24.** The cylindrical battery according to claim 21,
wherein the positive electrode active material includes a lithium nickel-based oxide containing 80 mol% or more of Ni based on the total number of moles of a transition metal.

**25.** The cylindrical battery according to claim 21,

wherein the active material layer of the first electrode has a porosity of 15% to 23%, and
the active material layer of the first electrode contains flake graphite in a weight ratio of 0.05 wt% to 5 wt%.

**26.** The cylindrical battery according to claim 21,
wherein the active material layer of the first electrode further contains carbon nanotubes.

**27.** The cylindrical battery according to claim 21,

wherein the active material layer of the second electrode includes a silicon-based negative electrode active material and a carbon-based negative electrode active material, and
the silicon-based negative electrode active material and the carbon-based negative electrode active material are included in a weight ratio of 1 : 99 to 20 : 80.

**28.** A battery pack, comprising:

a plurality of cylindrical batteries according to any one of claims 1 to 27; and
a pack housing configured to accommodate the plurality of cylindrical batteries.

**29.** A vehicle, comprising the battery pack according to claim 28.

FIG. 1

FIG. 2

FIG. 3

230

210a

A

211a

231

EP 4 322 315 A1

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

New CNT

FIG. 26

Existing CNT

FIG. 27

| Property | | Existing CNT | New CNT |
|---|---|---|---|
| Powder | Specific Surface Area(m²/g) | 200~300 | 300~450 |
| | Diameter (nm) | 10 | 3~6 |
| | Wall Number | 9~14 | 2~5 |

FIG. 28

EP 4 322 315 A1

FIG. 29

61

FIG. 30

FIG. 31

## 0.5C/1.0C 45°C Cycle(2.5-4.25V)

FIG. 32

|  | #1 | #2 | #3 | #4 | #6 |
|---|---|---|---|---|---|
| Item | Existing CNT | New CNT | | | |
| Conductive Material Content | 0.90% | 0.45% | 0.50% | 0.55% | 0.6% |
| Solid Content | 67% | 73% | 72% | 71% | 70.5% |
| Viscosity (cp) | 7,000 | 8,500 | 6,400 | 6,900 | 6,600 |
| MP Coating Layer | 10.57 | 13.44 | 13.67 | 10.03 | 9.55 |
| MP Interface Layer | 0.095 | 0.106 | 0.070 | 0.061 | 0.053 |

FIG. 33

FIG. 34

FIG. 35

5.0kV 9.7mm x5.00k SE(M)          10.0um

FIG. 36

FIG. 37

FIG. 38

FIG. 39

FIG. 40

FIG. 41

FIG. 42

FIG. 43

FIG. 44

FIG. 45

FIG. 46

400S

430 420 430 420 430 420 430

410

d3
d4

Slitting Slitting Slitting Slitting Slitting

FIG. 47

400S

420 420 420

410 430 430 430 430

d4

Slitting Slitting Slitting Slitting Slitting

FIG. 48

400

FIG. 49

500S

d3

d4

Slitting    Slitting    Slitting    Slitting    Slitting

FIG. 50

500S

500DA 500C
510 530 520 530 520 530

→ d4

▲ ▲ ▲ ▲ ▲
Slitting Slitting Slitting Slitting Slitting

FIG. 51

500

500D 520

d3
520B
d4

500D
510 530

FIG. 52

FIG. 53

800

830 820B 820

900

d2

810

B1

900

d1

710

B2

730 720B 720

700

FIG. 54

700S

710

730   720   730   720   730   720   730

d4

Slitting   Slitting   Slitting   Slitting   Slitting

FIG. 55

800S

810

830    820    830    820    830    820    830

d4

Slitting   Slitting   Slitting   Slitting   Slitting

FIG. 56

| | |
|---|---|
| ▨ | Low efficiency SiO |
| ▩ | Ultra-high efficiency SiO |

Cell Energy Density(Wh/L)

0%    5%    10%    15%

SiO blending ratio in anode(%)

# INTERNATIONAL SEARCH REPORT

International application No.

**PCT/KR2022/016198**

## A. CLASSIFICATION OF SUBJECT MATTER

**H01M 50/531**(2021.01)i; **H01M 50/559**(2021.01)i; **H01M 50/179**(2021.01)i; **H01M 10/04**(2006.01)i; **H01M 50/538**(2021.01)i; **H01M 50/583**(2021.01)i

According to International Patent Classification (IPC) or to both national classification and IPC

## B. FIELDS SEARCHED

Minimum documentation searched (classification system followed by classification symbols)

H01M 50/531(2021.01); H01M 10/052(2010.01); H01M 2/00(2006.01); H01M 2/18(2006.01); H01M 4/04(2006.01); H01M 4/1315(2010.01); H01M 4/505(2010.01); H01M 4/70(2006.01); H01M 50/172(2021.01); H01M 50/543(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 집전판(collector plate), 테두리부(edge part), 전극 단자(electrode terminal), 활물질층(active material layer)

## C. DOCUMENTS CONSIDERED TO BE RELEVANT

| Category* | Citation of document, with indication, where appropriate, of the relevant passages | Relevant to claim No. |
|---|---|---|
| Y | KR 10-2008-0050452 A (A123 SYSTEMS INC.) 05 June 2008 (2008-06-05)<br>See paragraphs [0077]-[0086] and figures 1-5b. | 1-29 |
| Y | US 2014-0162097 A1 (JOHNSON CONTROLS - SAFT ADVANCED POWER SOLUTIONS LLC) 12 June 2014 (2014-06-12)<br>See paragraphs [0102]-[0105] and figures 18A-18B and 21. | 1-29 |
| Y | JP 2021-057234 A (PANASONIC IP MANAGEMENT CORP.) 08 April 2021 (2021-04-08)<br>See paragraphs [0017], [0030] and [0042] and figures 3-4. | 9-14,18-20 |
| Y | KR 10-2001-0056363 A (SAMSUNG SDI CO., LTD.) 04 July 2001 (2001-07-04)<br>See figure 2. | 15-19 |
| Y | KR 10-2021-0095149 A (SUMITOMO CHEMICAL CO., LTD.) 30 July 2021 (2021-07-30)<br>See paragraphs [0027], [0031] and [0077]-[0080] and claim 1. | 21-27 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 January 2023** | **27 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/016198**

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0079178 A (LG ENERGY SOLUTION, LTD.) 29 June 2021 (2021-06-29)<br>See paragraphs [0208]-[0211]. | 27 |

Form PCT/ISA/210 (second sheet) (July 2022)

## INTERNATIONAL SEARCH REPORT
### Information on patent family members

International application No.

**PCT/KR2022/016198**

| Patent document cited in search report | | | Publication date (day/month/year) | Patent family member(s) | | | Publication date (day/month/year) |
|---|---|---|---|---|---|---|---|
| KR | 10-2008-0050452 | A | 05 June 2008 | CN | 101305481 | A | 12 November 2008 |
| | | | | CN | 101305481 | B | 12 January 2011 |
| | | | | CN | 101305481 | C | 12 November 2008 |
| | | | | EP | 2429010 | A1 | 14 March 2012 |
| | | | | EP | 2429010 | B1 | 17 December 2014 |
| | | | | JP | 2009-507345 | A | 19 February 2009 |
| | | | | JP | 5705408 | B2 | 22 April 2015 |
| | | | | KR | 10-1304125 | B1 | 05 September 2013 |
| | | | | TW | 200737567 | A | 01 October 2007 |
| | | | | TW | I462371 | B | 21 November 2014 |
| | | | | US | 2007-0117011 | A1 | 24 May 2007 |
| | | | | US | 2007-0269685 | A1 | 22 November 2007 |
| | | | | US | 2011-0212360 | A1 | 01 September 2011 |
| | | | | US | 7927732 | B2 | 19 April 2011 |
| | | | | US | 8084158 | B2 | 27 December 2011 |
| | | | | US | 8389154 | B2 | 05 March 2013 |
| | | | | WO | 2007-028152 | A2 | 08 March 2007 |
| | | | | WO | 2007-028152 | A3 | 04 October 2007 |
| US | 2014-0162097 | A1 | 12 June 2014 | CN | 102217116 | A | 12 October 2011 |
| | | | | CN | 102217116 | B | 18 March 2015 |
| | | | | CN | 102449808 | A | 09 May 2012 |
| | | | | CN | 102449808 | B | 15 April 2015 |
| | | | | EP | 2347461 | A2 | 27 July 2011 |
| | | | | EP | 2347461 | B1 | 06 April 2016 |
| | | | | EP | 2419946 | A2 | 22 February 2012 |
| | | | | EP | 2419946 | B1 | 13 April 2016 |
| | | | | US | 2011-0256433 | A1 | 20 October 2011 |
| | | | | US | 2012-0077062 | A1 | 29 March 2012 |
| | | | | US | 2012-0301756 | A1 | 29 November 2012 |
| | | | | US | 8263246 | B2 | 11 September 2012 |
| | | | | US | 8679678 | B2 | 25 March 2014 |
| | | | | US | 8945740 | B2 | 03 February 2015 |
| | | | | US | 9496557 | B2 | 15 November 2016 |
| | | | | WO | 2010-059957 | A2 | 27 May 2010 |
| | | | | WO | 2010-059957 | A3 | 26 August 2010 |
| | | | | WO | 2010-120906 | A2 | 21 October 2010 |
| | | | | WO | 2010-120906 | A3 | 13 January 2011 |
| JP | 2021-057234 | A | 08 April 2021 | None | | | |
| KR | 10-2001-0056363 | A | 04 July 2001 | JP | 2001-196047 | A | 19 July 2001 |
| | | | | JP | 4459429 | B2 | 28 April 2010 |
| | | | | KR | 10-0349908 | B1 | 22 August 2002 |
| | | | | US | 2001-0004505 | A1 | 21 June 2001 |
| | | | | US | 6509115 | B2 | 21 January 2003 |
| KR | 10-2021-0095149 | A | 30 July 2021 | CN | 113165907 | A | 23 July 2021 |
| | | | | EP | 3889112 | A1 | 06 October 2021 |
| | | | | JP | 2020-087879 | A | 04 June 2020 |
| | | | | JP | 6600734 | B1 | 30 October 2019 |
| | | | | US | 2022-0029158 | A1 | 27 January 2022 |
| | | | | WO | 2020-110486 | A1 | 04 June 2020 |

Form PCT/ISA/210 (patent family annex) (July 2022)

**INTERNATIONAL SEARCH REPORT**
Information on patent family members

International application No.

**PCT/KR2022/016198**

| Patent document cited in search report | | | Publication date (day/month/year) | Patent family member(s) | | | Publication date (day/month/year) |
|---|---|---|---|---|---|---|---|
| KR | 10-2021-0079178 | A | 29 June 2021 | CN | 114747041 | A | 12 July 2022 |
| | | | | EP | 4047679 | A1 | 24 August 2022 |
| | | | | WO | 2021-125535 | A1 | 24 June 2021 |

Form PCT/ISA/210 (patent family annex) (July 2022)

**REFERENCES CITED IN THE DESCRIPTION**

**Patent documents cited in the description**

- KR 1020210142180